Europäisches Patentamt

European Patent Office

Office européen des brevets

(19)

(11) Veröffentlichungsnummer: **0 263 777 B1**

# (12) EUROPÄISCHE PATENTSCHRIFT

(45) Veröffentlichungstag der Patentschrift: **11.12.91**

(51) Int. Cl.⁵: **G01C 21/16**

(21) Anmeldenummer: **87730109.3**

(22) Anmeldetag: **21.09.87**

---

(54) **Integriertes, redundantes Referenzsystem für die Flugregelung und zur Erzeugung von Kurs- und Lageinformationen.**

---

(30) Priorität: **07.10.86 DE 3634023**

(43) Veröffentlichungstag der Anmeldung:
**13.04.88 Patentblatt 88/15**

(45) Bekanntmachung des Hinweises auf die
Patenterteilung:
**11.12.91 Patentblatt 91/50**

(84) Benannte Vertragsstaaten:
**DE ES FR GB IT**

(56) Entgegenhaltungen:
**DE-A- 3 141 836
GB-A- 2 021 264
US-A- 3 489 004
US-A- 4 125 017
US-A- 4 280 188**

(73) Patentinhaber: **Bodenseewerk Gerätetechnik
GmbH
Alte Nussdorfer Strasse 15 Postfach 1120
W-7770 Überlingen/Bodensee(DE)**

(72) Erfinder: **Krogmann, Uwe
Zur Asche 24
W-7770 Überlingen(DE)**
Erfinder: **Bessel, Jürgen
Von Mader Strasse 23
W-7770 Überlingen(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg(DE)**

---

## Beschreibung

## Technisches Gebiet

Die Erfindung betrifft ein intergriertes, redundantes Referenzsystem für die Flugregelung und zur Erzeugung von Kurs- und Lageinformationen, enthaltend

(a) wenigstens vier trägerfahrzeugfest angeordnete (strap down) Winkelgeschwindigkeitssensoren, deren Eingangsachsen so zueinander orientiert sind, daß sie Winkelgeschwindigkeitsinformationen redundant liefern,

(b) eine Mehrzahl von trägerfahrzeugfest angeordneten (strap down) Beschleunigungssensoren, die Beschleunigungsinformationen liefern,

(c) Mittel zur Fehlererkennung, denen die Winkelgeschwindigkeitssignale zugeführt werden,

(d) erste Signalverarbeitungsmittel,

- denen die Winkelgeschwindigkeits- und Beschleunigungsinformationen zugeführt werden und
- welche korrigierte Winkelgeschwindigkeits- und Beschleunigungssignale bezogen auf ein fahrzeugfestes Koordinatensystem für die Stabilisierung zur Aufschaltung auf einen Flugregler liefern, und

(e) zweite Signalverarbeitungsmittel,

- denen die korrigierten Winkelgeschwindigkeits-und Beschleunigungsinformationen zugeführt werden und
- welche Kurs- und Lagereferenzsignale liefern.

## Zugrundeliegender Stand der Technik

Flugregler enthalten Winkelgeschwindigkeits- und Beschleunigungssensoren, z.B. Wendekreisel und Beschleunigungsmesser, welche die Aufgabe haben, die Flugbewegung gegenüber Störungen zu stabilisieren. Bei vielen Flugzeugen, insbesondere bei Kampfflugzeugen, bei denen es auf hohe Manövrierfähigkeit ankommt, ist die aerodynamische Eigenstabilität des Flugzeugs soweit reduziert, daß die Stabilisierung des Flugzeugs durch den Flugregler überhaupt eine notwendige Voraussetzung für die Fliegbarkeit des Flugzeugs ist. Damit nicht bei Ausfall eines Teils des Flugreglers das Flugzeug mangels Stabilisierung abstürzt, sind die für die Stabilisierung erforderlichen Sensoren und Schaltungen bzw. Signalverarbeitungsmittel mehrfach redundant vorgesehen. Das erfordert einen erheblichen Aufwand.

Der Flugregler enthält weiterhin ein Kurs - Lage - Refernzgerät. Ein solches Kurs - Lage - Referenzgerät liefert die Lagewinkel des Flugzeugs im Raum, also Nick-und Rollwinkel sowie den Kurs. Für das Kurs - Lage - Referenzgerät werden üblicherweise andere Sensoren benutzt als für die Stabilisierung. Auch die Sensoren, Schaltungen und Signalverarbeitungsmittel des Kurs - Lage - Referenzgerätes sind bei modernen Flugreglern vermehrfacht.

Durch die US-A-4 212 443 ist ein integriertes, redundantes Referenzsystem für die Flugregelung und zur Erzeugung von Kurs- und Lageinformationen bekannt. Das Referenzsystem enthält zwei zweiachsige Wendekreisel, also dynamisch abgestimmte, elektrisch gefesselte Kreisel mit zwei zueinander und zur Drallachse senkrechten Eingangsachsen. Die Drallachsen der beiden Kreisel sind gekreuzt zueinander angeordnet. Die Eingangsachsen der beiden Kreisel liegen in zueinander senkrechten Ebenen. Betrachtet man die Richtung der Eingangsachsen der Kreisel als von einem gemeinsamen Ursprung ausgehende Vektoren, dann liegen die vier Eingangsachsen der beiden zweiachsigen Wendekreisel auf einem Kegelmantel. Der Öffnungswinkel des Kegels ist 90°. Die Eingangsachsen des einen Wendekreisels liegen in einer ersten Ebene diametral einander gegenüber. Die Eingangsachsen des anderen Wendekreisels liegen in einer zweiten Ebene diametral einander gegenüber.Die Achse des Kegels liegt parallel zur Rollrichtung. Bei dieser Anordnung wird die Winkelgeschwindigkeit des Flugzeugs um die Rollachse zweifach bestimmt, nämlich einmal aus der Summe der Signale der Eingangsachsen des einen Wendekreisels und zum anderen aus der Summe der Signale der Eingangsachsen des anderen Wendekreisels. Wenn diese beiden Meßwerte um mehr als einen vorgegebenen, die Toleranzen repräsentierenden Schwellwert voneinander abweichen, wird angezeigt, daß das Referenzgerät defekt ist.

Es wird in der US-A-4 212 443 auch vorgeschlagen, ein zweites, identisches Referenzgerät vorzusehen, das in gleicher Weise zu den Achsen des Flugzeugs ausgerichtet ist wie das erste. Wenn das erste Referenzgerät defekt ist, erfolgt eine Umschaltung auf das zweite.

Das Referenzgerät der US-A-4 212 443 enthält auch drei zueinander orthogonal angeordnete Beschleunigungsmesser. Die Signale der vier Eingangsachsen der Wendekreisel werden wie folgt verarbeitet: Aus den Signalen der Beschleunigungsmesser und der gemessenen Fluggeschwindigkeit werden Anfangswerte für die Fluglage gewonnen. Durch Koordinatentransformation und Integration ergeben sich die Elemente der Richtungskosinusmatrix. Aus diesen werden die Eulerwinkel, also Kurs und Lage des Flugzeugs gebildet.Die Signale der Wendekreisel liefern außerdem die Winkelgeschwindigkeiten des Flugzeugs in einem flugzeugfesten Koordinatensystem.

Das bekannte Referenzgerät liefert lediglich eine Selbstüberwachung, d.h. es liefert ein Fehlersignal, wenn es defekt ist. Das Referenzgerät hat also das Fehlerverhalten "fail-safe". Wenn das Referenzgerät verdoppelt wird, so daß bei Ausfall eines Referenzgerätes automatisch auf das andere umgeschaltet und der Ausfall signalisiert werden kann, ergibt sich -mit vier zweiachsigen Wendekreiseln-ein Fehlerverhalten "fail-operational, fail-safe". Bei Auftreten eines ersten Fehlers an den Wendekreiseln bleibt das System noch funktionsfähig. Ein dann eintretender zweiter Ausfall wird angezeigt. Voraussetzung für dieses Verhalten ist aber, daß überhaupt eine Rollbewegung stattfindet. Wenn ein Defekt eines Wendekreisels eintritt, während die Winkelgeschwindigkeit um die Rollachse null ist, dann wird dieser Ausfall nicht angezeigt. Das Flugzeug kann dann bei einer Bewegung um die Nickachse von einem defekten Wendekreisel gesteuert werden.

Eine Fehlerüberwachung der Beschleunigungsmesser erfolgt bei dem bekannten Referenzgerät gar nicht.

Die DE-A-3 141 836 strebt an, ein billiges Kurs - Lage - Referenzgerät zu schaffen, das als redundantes Gerät zu einem Hauptgerät verwendbar ist. Dabei liefern drei Wendekreisel mit Koordinatentransformationsschaltung und Integratoren Roll- und Nickwinkel. Diese sind durch Quer-und Längsbeschleunigungsmesser über Tiefpaßfilter gestützt. Der Kurswinkel wird in einem Kursfilter so lange durch das Hauptgerät gestützt, wie das Hauptgerät funktioniert.

Die US-A-4 020 702 beschreibt ein redundantes Trägheitsmesystem mit drei Strapdown - Plattformen. Die Empfindlichkeitsachsen der Sensoren sind nach den Flächen eines Dodekahedron ausgerichtet.

Die DE-A-3 233 612 beschreibt ein Gerät zur Bestimmung der Nordrichtung. Mittels eines zweiachsigen Kreisels mit vertikaler Drallachse wird aus den Komponenten der Horizontalkomponente der Erddrehgeschwindigkeit der Azimutwinkel nach Nord bestimmt. Um den Einfluß von Störbewegungen um die Eingangsachsen zu unterdrüoken, sitzt der Kreisel zusammen mit Lotfühlern auf einer kardanisch gelagerten Plattform. Die Lotfühler sind auf Drehmomenterzeuger des Kreisels geschaltet. Abgriffe des Kreisels steuern Plattformstellmotore. Bei einer anderen Ausführung werden diese Vorgänge im Rechner mit einer "virtuellen Plattform" simuliert.

## Offenbarung der Erfindung

Der Erfindung liegt die Aufgabe zugrunde, bei Verwendung einer Mindestzahl von Sensoren einen möglichst hohen Grad von Sicherheit zu erzielen.

Insbesondere liegt der Erfindung die Aufgabe zugrunde, bei Verwendung von vier zweiachsigen Winkelgeschwindigkeitssensoren ein Fehlerverhalten "fail-operational, fail-operational, fail-safe" zu erhalten, also zu erreichen, daß das System nach Ausfall zweier Winkelgeschwindigkeitssensoren noch funktionsfähig bleibt.

Der Erfindung liegt weiter die Aufgabe zugrunde, ein Kurs-Lage - Referenzsystem so auszubilden, daß auch die Beschleunigungssensoren ein solches Fehlerverhalten zeigen.

Erfindungsgemäß wird diese Aufgabe mit dem eingangs genannten Referenzsystem dadurch gelöst, daß

(f) die wenigstens vier zweiachsigen Winkelgeschwindigkeitssensoren mit unterschiedlichen Orientierungen angeordnet sind.

(g) die Signale sämtlicher Winkelgeschwindigkeitssensoren auf die für alle Winkelgeschwindigkeitssensoren gemeinsamen Mittel zur Fehlererkennung und -ausschaltung aufgeschaltet sind, welche einen Satz von ausgewählten Winkelgeschwindigkeitssignalen intakter Winkelgeschwindigkeitssensoren auswählen,

(h) die ersten und die zweiten Signalverarbeitungsmittel von den ausgewählten Winkelgeschwindigkeitsinformationen beaufschlagt sind.

Um eine Sicherheit gegen Ausfall oder Defekt von Beschleunigungssensoren zu erhalten, kann weiter vorgesehen sein, daß

(i) die Beschleunigungssensoren mit mehr als drei Eingangsachsen so zueinander orientiert sind, daß sie Beschleunigungsinformationen redundant liefern,

(j) die Beschleunigungsinformationen aller Beschleunigungssensoren auf die Mittel zur Fehlererkennung aufgeschaltet sind, welche daraus einen Satz von Beschleunigungsinformationen intakter Beschleunigungssensoren auswählt, und

(k) die ersten und zweiten Signalverarbeitungsmittel von den ausgewählten Beschleunigungsinformationen beaufschlagt sind.

Die für die Stabilisierung des Flugzeugs verwendeten Sensoren werden gleichzeitig benutzt, um eine Kurs - Lage-Referenz zumindest für Notbetrieb oder zu Anzeigezwecken zu erhalten. Durch geschickte Anordnung der Sensoren wird dabei mit einer Mindestanzahl von Sensoren eine ausreichende Redundanz der Signalerzeugung und zwar sowohl für die Stabilisierung als auch für die Kurs - Lage - Referenz erhalten. Es erfolgt eine Fehlererkennung und -ausschaltung, wenn einer der vermehrfachten Sensoren ausfällt.

Ausgestaltungen der Erfindung sind Gegenstand der abhängigen Ansprüche.

Zwei Ausführungsbeispiele der Erfindung sind nachstehend unter Bezugnahme auf die zugehörigen Zeichnungen näher erläutert.

## Kurze Beschreibung der Zeichnungen

| | |
|---|---|
| Fig.1 | ist eine perspektivische Darstellung und zeigt einen Sensorblock mit vier zweiachsigen Wendekreiseln und fünf Beschleunigungsmessern als Winkelgeschwindigkeits- bzw. Beschleunigungssensoren sowie die Orientierung der Eingangsachsen der Sensoren bei einer ersten Ausführung eines Referenzgerätes. |
| Fig.2 | ist eine schematische Darstellung und veranschaulicht die Orientierung der Eingangsachsen der Beschleunigungssensoren bei der Ausführung von Fig.1. |
| Fig.3 | ist eine perspektivische Darstellung und zeigt einen Sensorblock mit vier zweiachsigen Wendekreiseln und acht Beschleunigungsmessern bei einer zweiten Ausführung eines Referenzgerätes. |
| Fig.4 | ist eine schematische Darstellung und veranschaulicht die Orientierung der Eingangsachsen der Beschleunigungssensoren relativ zu dem Flugzeug bei der zweiten Ausführung eines Referenzgerätes. |
| Fig.5 | ist eine schematische Darstellung und veranschaulicht die räumliche Anordnung der Eingangsachsen der zweiachsigen Winkelgeschwindigkeitssensoren auf der Mantelfläche eines Kegels bei der zweiten Ausführung eines Referenzgerätes. |
| Fig.6 | ist eine Projektion des Kegels von Fig.5 auf die x-z-Ebene. |
| Fig.7 | ist ein Blockdiagramm des Sensorblocks. |
| Fig.8 | ist ein etwas mehr ins einzelne gehendes Blockdiagramm eines Kanals des Sensorblocks mit einem Fesselkreis für eine Eingangsachse eines Wendekreisels. |
| Fig.9 | ist ein Blockdiagramm und zeigt die weitere Verarbeitung der von dem Sensorblock gelieferten Signale. |
| Fig.10 | veranschaulicht die Redundanz der Signalverarbeitung für die Kurs - Lage - Referenz. |
| Fig.11 | veranschaulicht das Zusammenwirken der redundanten Signalverarbeitungsschaltung mit dem ebenfalls vierfach-redundanten Flugregelrechner. |
| Fig.12 | ist ein Blockdiagramm und veranschaulicht eine Grobausrichtung des Referenzgerätes vor dem Start. |
| Fig.13 | ist ein Blockdiagramm der Feinausrichtung des Referenzgerätes. |
| Fig.14 | ist eine schematische Darstellung und veranschaulicht die Anzahl der Kombinationen von jeweils zwei zweiachsigen Winkelgeschwindigkeitssensoren (Wendekreiseln), durch welche jeweils die vollständigen Winkelgeschwindigkeitsinformationen gewonnen werden können. |
| Fig.15 | ist eine Darstellung der vier zweiachsigen Kreisel mit einer Tabelle zur Erläuterung der Mehrheitsbetrachtungen bei der Lokalisierung eines defekten Wendekreisels. |
| Fig.16 | ist ein Blockdiagramm und veranschaulicht die Auswahl der von den Winkelgeschwindigkeitssensoren erhaltenen Meßdaten für die Weiterverarbeitung |
| Fig.17 | ist ein Blockdiagramm und veranschaulicht das Grundprinzip der Lokalisierung und Eliminierung fehlerhafter Meßdaten. |
| Fig.18 | ist ein Blockdiagramm und zeigt die weiterverarbeitung der von den Winkelgeschwindigkeitssensoren gelieferten und gemäß Fig.16 ausgewählten Signale zur Erzeugung der drei die Winkelgeschwindigkeiten um die flugzeugfesten Achsen wiedergebenden Signale. |
| Fig.19 | ist ein Blockdiagramm und veranschaulicht die Auswahl und die Hebelarmkompensation der von den Beschleunigungssensoren erhaltenen Meßdaten für die Weiterverarbeitung. |
| Fig.20 | ist ein Blockdiagramm und veranschaulicht die Auswahl der Signale für die Kurs - Lage - Referenz für die Weiterverarbeitung. |
| Fig.21 | ist ein Blockdiagramm und veranschaulicht die "Strapdown" - Rechnungen. |
| Fig.22 | ist ein Blockdiagramm und zeigt die Bestimmung von Anstell- und Schiebewinkel. |
| Fig.23 | ist ein Blockdiagramm und zeigt die Auslegung eines Vertikalkanals zur Erzeugung von |

Signalen, welche die Höhe und die Höhenänderung wiedergeben.

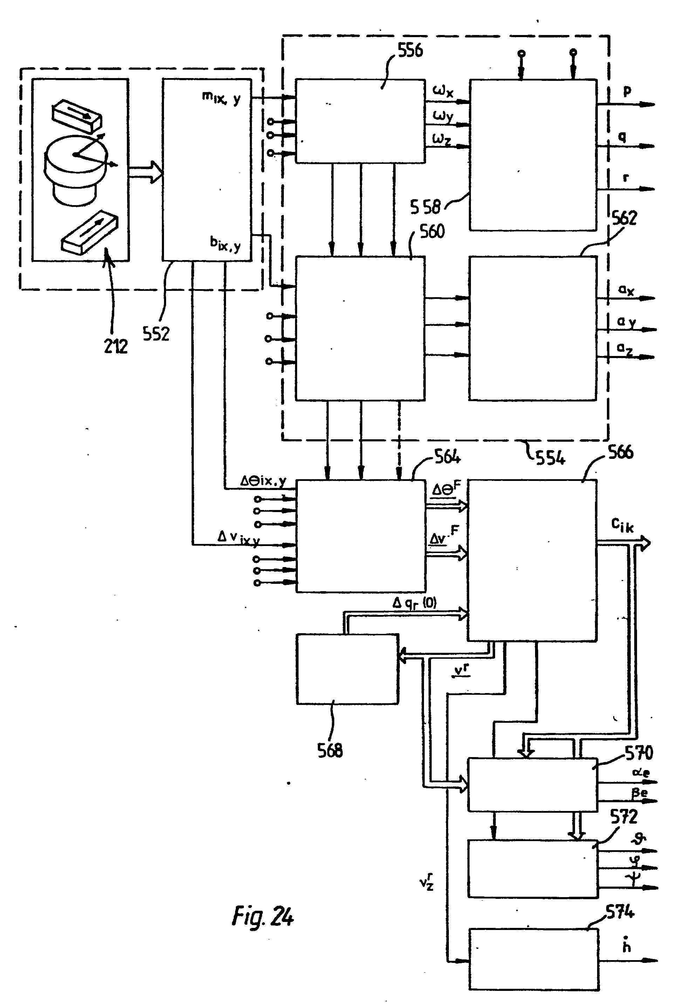

Fig.24 zeigt die Software - Struktur des Rechners der Trägheitsnavigationsanlage.

**Bevorzugte Ausführungen der Erfindung**

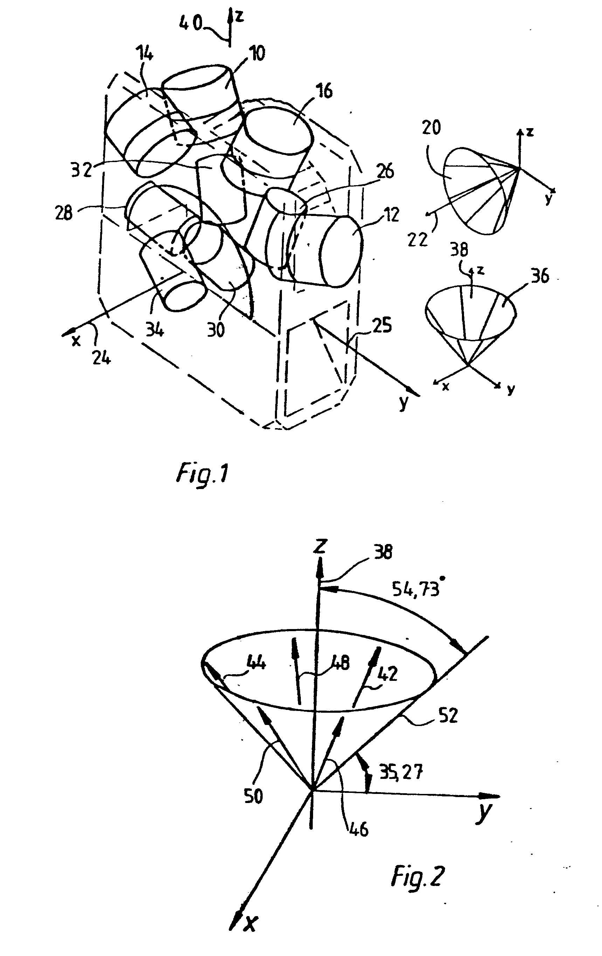

Die Winkelgeschwindigkeitssensoren sind zweiachsige, elektrisch gefesselte, dynamisch abgestimmte Kreisel. Die Winkelgeschwindigkeitssensoren haben zwei zueinander und zu der Drallachse senkrechte Eingangsachsen. Bei der Ausführung nach Fig.1 sind vier solche Winkelgeschwindigkeitssensoren 10,12,14 und 16 vorgesehen. Die acht Eingangsachsen der Winkelgeschwindigkeitssensoren 10,12,14,16 sind parallel zur Mantellinie eines gedachten Kegels 20 orientiert, wie in Fig.1 angedeutet ist. Die Achse 22 dieses gedachten Kegels 20 verläuft parallel zur Fahrzeuglängsachse 24 (x), also der Rollachse des Flugzeugs. Die Winkelgeschwindigkeitssensoren 10,12,14,16 sitzen in einem Körper 25 im wesentlichen auf einem Halbkreis um die Fahrzeuglängsachse 24 oder eine zu dieser parallele Achse herum. Innerhalb dieses Halbrunds von Winkelgeschwindigkeitssensoren 10,12,14,16 sitzen fünf Beschleunigungssensoren 26,28,30,32 und 34. Die Beschleunigungssensoren 26,28,39,32 und 34 haben Eingangsachsen, die ebenfalls parallel zu den Mantelflächen eines gedachten Kegels 36 orientiert sind. Das ist in Fig.1 angedeutet. Die Achse 38 dieses gedachten Kegels 36 verläuft parallel zur Hochachse 40 (z) des Fahrzeugs bzw. Flugzeugs. Wie in Fig.2 deutlicher dargestellt ist, beträgt der Öffnungswinkel dieses Kegels 36 bei der beschriebenen Ausführung $54,73°$. Die Eingangsachsen 42,44,46,48,50 der fünf Beschleunigungsmesser 26,28,30,32 und 34 sind durch sechs gleichmäßig um die Achse 38 des Kegels 36 verteilte Mantellinien bestimmt: Jede der Eingangsachsen 42,44,46,48 und 50 verläuft parallel zu einer von fünf dieser sechs Mantellinie. Diese Anordnung bietet die Möglichkeit, im Bedarfsfall noch einen sechsten Beschleunigungsmesser vorzusehen, dessen Eingangsachse dann parallel zu der sechsten Mantellinie 52 verlaufen würde. Bei der beschriebenen Anordnung bilden die Beschleunigungssensoren 26,28,30 mit ihren Eingangsachsen 42,44,46 ein orthogonales Koordinatensystem, das aber gegenüber dem von Roll-, Nick- und Hochachse des Flugzeugs gebildeten Koordinatensystem verdreht ist.

Mit der beschriebenen Anordnung werden insgesamt acht Winkelgeschwindigkeitskomponenten gemessen, nämlich zwei zueinander senkrechte für jeden Kreisel. Außerdem werden fünf Beschleunigungskomponenten gemessen.

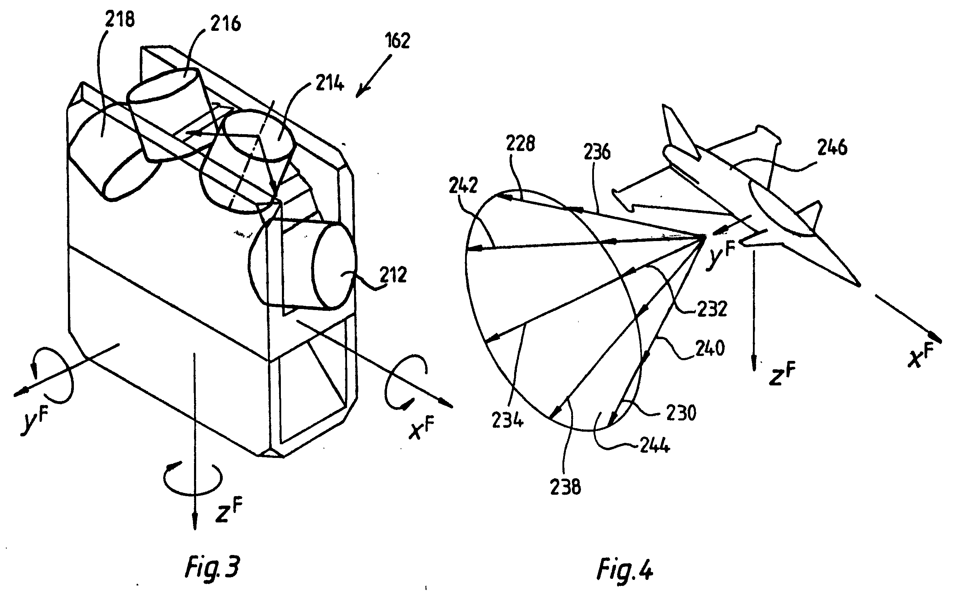

Die beschriebene Anordnung kommt mit einem Minimum an Beschleunigungsmessern zur Erzielung eines Fehlerverhaltens "fail-operational,fail-operational,fail-safe" aus. Fig. 3 und 4 zeigt eine alternative Sensoranordnung, die eine größere Anzahl von Beschleunigungsmessern benötigt, bei welcher aber die Montage und Wartung einfacher ist.

Bei der Anordnung nach Fig. 3 und 4 sind vier in einem Halbrund in einem Körper 210 angeordnete, identische Baugruppen 212,214,216 und 218 vorgesehen. Jede dieser Baugruppen enthält einen zweiachsigen Winkelgeschwindigkeitssensor und zwei Beschleunigungsmesser. Die Winkelgeschwindigkeitssensoren sind wieder zweiachsige Wendekreisel. Die Drallachsen der Wendekreisel verlaufen radial. Die Eingangsachsen 228,230; 232,234; 236,238 und 240,242 der in den Baugruppen 212, 214, 216 bzw. 218 angeordneten Wendekreisel liegen auf einem gedachten Kegel 244 mit einem Öffnungswinkel von $90°$. Die Empfindlichkeitsachsen der acht Beschleunigungsmesser fallen bei dieser Ausführung mit den Eingangsachsen der Winkelgeschwindigkeitssensoren zusammen. Die Achse des gedachten Kegels 244 ist hier parallel zur flugzeugfesten Nickachse $y_F$ des Flugzeugs 246.

Wie aus Fig.3 und 4 ersichtlich ist, sind die drei flugzeugfesten Roll-, Nick- und Hochachsen mit $x_F$ bzw. $y_F$ bzw. $z_F$ bezeichnet. Das Referenzsystem liefert, wie noch beschrieben wird, die Winkelgeschwindigkeiten p,q und r um diese drei flugzeugfesten Achsen.

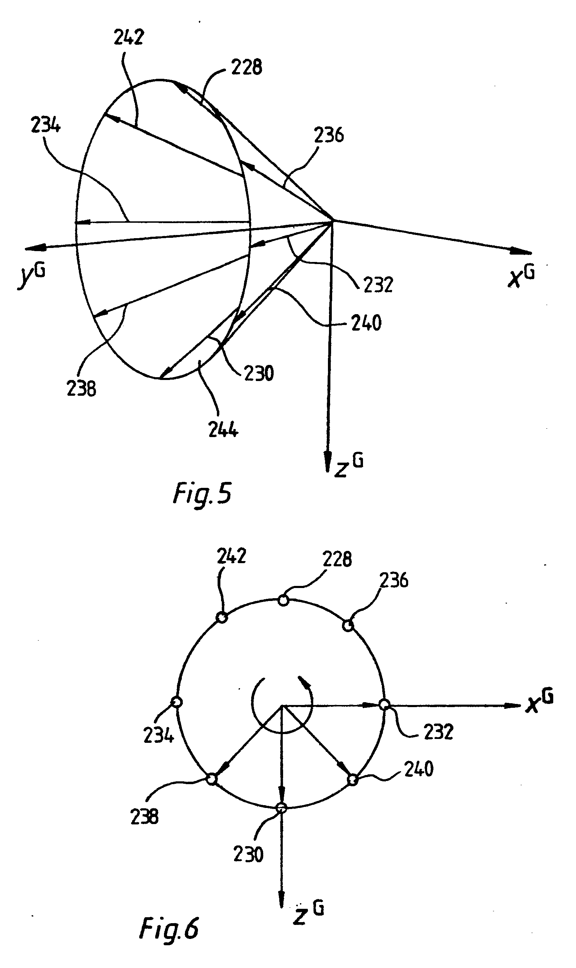

Fig. 5 und 6 zeigen die Geometrie der Eingangsachsen.

Der Kegel 244 hat, wie gesagt, einen Öffnungswinkel von $90°$. Die Eingangsachsen jedes der zweiachsigen Winkelgeschwindigkeitssensoren liegen in einer durch die Kreiselachse gehenden Ebene. Diese Ebenen sind in Winkelabständen von $45°$ angeordnet, wie aus Fig.6 am besten ersichtlich ist. Die Winkelgeschwindigkeiten p,q und r um die flugzeugfesten Achsen $x_F$, $y_F$ und $z_F$ lassen sich auf verschiedene Weise als Linearkombinationen der Signale von Winkelgeschwindigkeissensoren darstellen. In gleicher Weise lassen sich die Beschleunigungen in Richtung der flugzeugfesten Achsen $x_F$, $y_F$ und $z_F$ auf verschiedene Weise als Linearkombinationen der Signale von Beschleunigungssensoren darstellen, deren Empfindlichkeitsachsen nach den Richtungen 228 bis 242 ausgerichtet sind. Bezeichnet man mit $m_{1x}$ und $m_{1y}$ die beiden Signale des Winkelgeschwindigkeitssensors oder der Beschleunigungssensoren der Baugruppe 212, mit $m_{2x}$ und $m_{2y}$ die beiden Signale des Winkelgeschwindigkeitssensors oder der Beschleunigungssensoren der Baugruppe 214, mit $m_{3x}$ und $m_{3y}$ die beiden Signale des Winkelgeschwindigkeitssensors oder der Beschleunigungssensoren der Baugruppe 216 und mit $m_{4x}$ und $m_{4y}$ die beiden Signale des

Winkelgeschwindigkeitssensorsoder der Beschleunigungsmesser der Baugruppe 218, dann ergeben sich die Winkelgeschwindigkeiten bzw. Beschleunigugen in Richtung der $x_F$-, $y_F$- und $z_F$-Achsen gemäß der nachstehenden Tabelle:

| | GIER,r | NICK,q | ROLL,p |
|---|---|---|---|
| I | $\frac{1}{\sqrt{2}}(m_1 y - m_1 x)$ | $\frac{1}{\sqrt{2}}(m_1 x + m_1 y)$ | $\frac{1}{\sqrt{2}}(m_2 x - m_2 y)$ |
| II | $(m_3 y - m_3 x) + \frac{1}{\sqrt{2}}(m_2 x - m_2 y)$ | $\frac{1}{\sqrt{2}}(m_2 x + m_2 y)$ | $(m_3 x - m_3 y) - \frac{1}{\sqrt{2}}(m_1 x - m_1 y)$ |
| III | $(m_4 x - m_4 y) - \frac{1}{\sqrt{2}}(m_2 x - m_2 y)$ | $\frac{1}{\sqrt{2}}(m_3 x + m_3 y)$ | $(m_4 x - m_4 y) + \frac{1}{\sqrt{2}}(m_1 x - m_1 y)$ |
| IV | $\frac{1}{2}(m_4 x - m_4 y) - \frac{1}{2}(m_3 x - m_3 y)$ | $\frac{1}{\sqrt{2}}(m_4 x + m_4 y)$ | $\frac{1}{2}(m_3 x - m y) + \frac{1}{2}(m_4 x - m_4 y)$ |

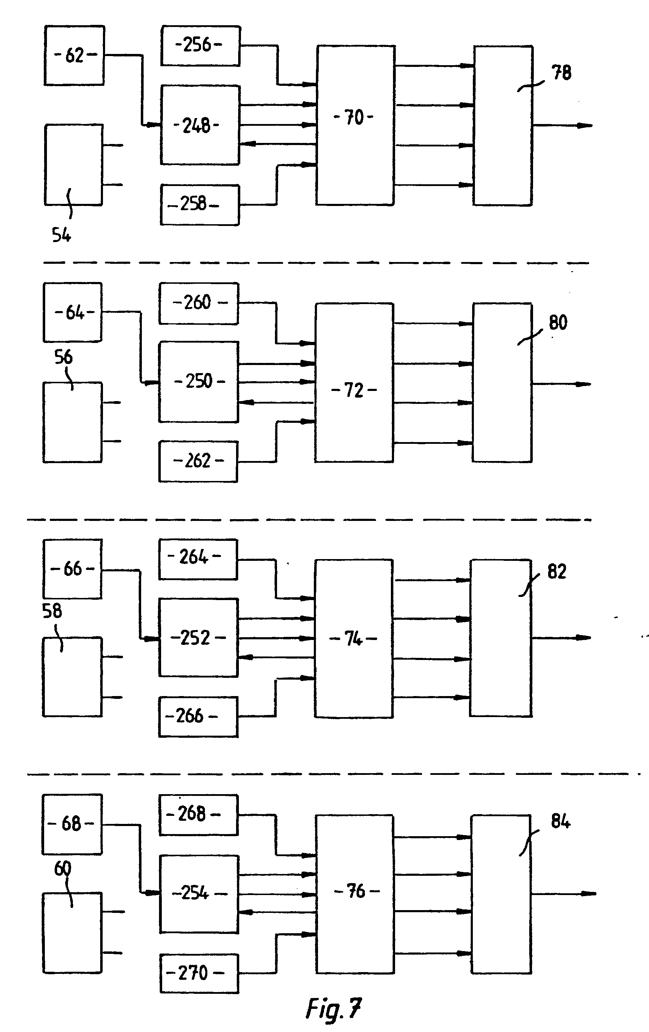

Der Sensorblock von Fig.3 mit der zugehörigen Beschaltung ist in Fig.7 als Blockschaltbild dargestellt.

Es sind die vier Winkelgeschwindigkeitssensoren 248,250, 252,254 als Blöcke dargestellt. Jedem dieser Winkelgeschwindigkeitssensoren 248,250,252 und 254 ist eine gesonderte Stromversorgungseinheit 54,56,58,60 zugeordnet. Weiterhin hat jeder der als zweiachsige Wendekreisel ausgebildeten Winkelgeschwindigkeitssensoren 10,12,14,16 eine gesonderte Motorstromversorgung 62,64,66,68. Die Meßsignale der Winkelgeschwindigkeitssensoren 248,250,252 beaufschlagen je eine Signalverarbeitungseinheit 70,72, 74,76.

Es sind weiter die acht Beschleunigungssensoren 256,258; 260,262; 264,266; 268,270 in Form üblicher Beschleunigungsmesser ebenfalls als Blöcke dargestellt. Die Signalverarbeitungseinheiten 70,72,74,76 sind auch von den Signalen der Beschleunigungssensoren 256,258,260,262; 264,266; 268,270 beaufschlagt. Die Beschleunigungssensoren 256,258,260,262,264,266,268,270 werden von den Stromversorgungseinheiten 54,56,58,60 der Winkelgeschwindigkeitssensoren 248,250,252,254 mit versorgt. Jede Signalverarbeitungseinheit 70,72,74,76 liefert an ein zugehöriges Register 78,80,82,84 zwei Winkelgeschwindigkeitssignale, nämlich eines für jede Eingangsachse des zugehörigen Winkelgeschwindigkeitssensors 248,250,252,254 und zwei Beschleunigungssignale. Die Winkelgeschwindigkeitssignale sind mit $\omega_1$, $\omega_2$ bzw. $\omega_3$, $\omega_4$ bzw. $\omega_5$, $\omega_6$ bzw. $\omega_7$, $\omega_8$ bezeichnet. Die Beschleunigungssignale sind mit $a_1$, $a_2$, $a_3$, $a_4$, $a_5$, $a_6$, $a_7$ und $a_8$ bezeichnet.

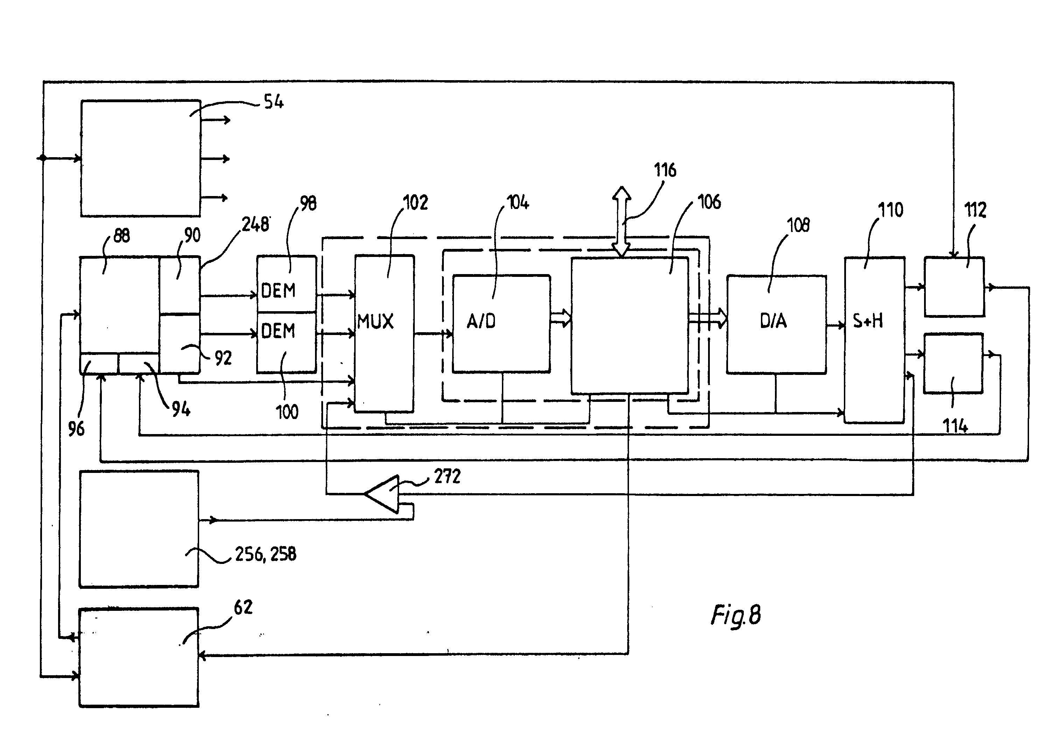

Fig. 8 zeigt im einzelnen einen der in Fig.7 durch gestrichelte Linien abgetrennten Kanäle, z.B. den, der dem Winkelgeschwindigkeitssensor 248 zugeordnet ist. Entsprechende Teile sind in Fig.8 mit den gleichen Bezugszeichen versehen wie in Fig.7.

Der Winkelgeschwindigkeitssensor 248 enthält einen dynamisch abgestimmten Kreisel 88 mit Lageab-griffen 90,92, welche auf die Bewegung des Kreisels um je eine der beiden zueinander senkrechten Eingangsachsen ansprechen. Weiterhin enthält der Winkelgeschwindigkeitssensor 248 zwei Drehmomenterzeuger 94 und 96, über welche Drehmomente auf den Kreisel 88 um je eine der Eingangsachsen ausübbar sind. Dabei sitzt der Drehmomenterzeuger 94 auf der Eingangsachse des Lageabgriffs 90. Er wird aber von einem Signal beaufschlagt, das von dem Lageabgriff 92 abgeleitet ist. Ebenso sitzt der Drehmomenterzeuger 96 auf der Eingangsachse des Lageabgriffs 92. Der Drehmomenterzeuger 96 wird aber von einem Signal beaufschlagt, das von dem Lageabgriff 90 abngeleitet ist. Die Drehmomenterzeuger werden somit überkreuz von den Lageabgriffen angesteuert. Auf diese Weise wird aufgrund der Eigenschaften von Kreiseln eine elektrische Fesselung des Kreisels 88 an seine Ruhelage erreicht. Die dazu erforderlichen Drehmomente und damit die Signale, welche diese Drehmomente hervorrufen, sind porportional der Winkelgeschwindigkeiten um die Eingangsachsen. Die Lageabgriffe 90 und 92 werden von der Motorstromversorgung 62 mit Wechselstrom gespeist und liefern dementsprechend Wechselstromsignale als Abgriffssignale. Die Abgriffsignale von den Lageabgriffen 90,92 werden durch Demodulatoren 98,100 demoduliert. Die so erhaltenen demodulierten Abgriffssignale werden über einen Multiplexer 102 auf einen Analog-Digital-Wandler 104 geschaltet. Der Analog-Digital-Wandler 104 bildet daraus digitalisierte Abgriffsignale. Die digitalisierten Abgriffsignale sind auf eine digitale Signalverarbeitungsschaltung 106 geschaltet. Die digitale Signalverarbeitungsschaltung 106 liefert digitale Fesselsignale für den Winkelgeschwindigkeitssensor 248. Diese digitalen Fesselsignale sind auf einen Digital-Analog-Wandler 108 aufgeschaltet. Der Digital-Analog-Wandler 108 erzeugt analoge Fesselsignale. Analogwertspeichermittel 110 (Sample-Hold-Schaltungen) für die analogen Fesselsignale sind mit dem Digital-Analog-Wandler 108 verbunden. Die Analogwertspeichermittel 110 sind über Verstärker 112,114 mit den Drehmomenterzeugern 96 bzw. 94 des Kreisels 88 im Winkelgeschwindigkeitsgeber 248 verbunden. Hierdurch wird der Kreisel 88 in der beschriebenen Weise an seine Ruhelage gefesselt.

Die Signalverarbeitung im Fesselkreis erfolgt hier digital. Dabei wird auch das Winkelgeschwindigkeitssignal in der digitalen Signalverarbeitungsschaltung 106 in digitaler Form erhalten und, wie bei 116 angedeutet, ausgeben. Der Analog-Digital-Wandler 104 und die Signalverarbeitungsschaltung 106 erhalten über Verstärker 272 und den Multiplexer 102 auch Signale von den Beschleunigungsmessern 256,258. Diese Signale werden bei 116 digital ausgegeben. Sie dienen auch zur Kompensation beschleunigungsabhängiger Kreiselfehler.

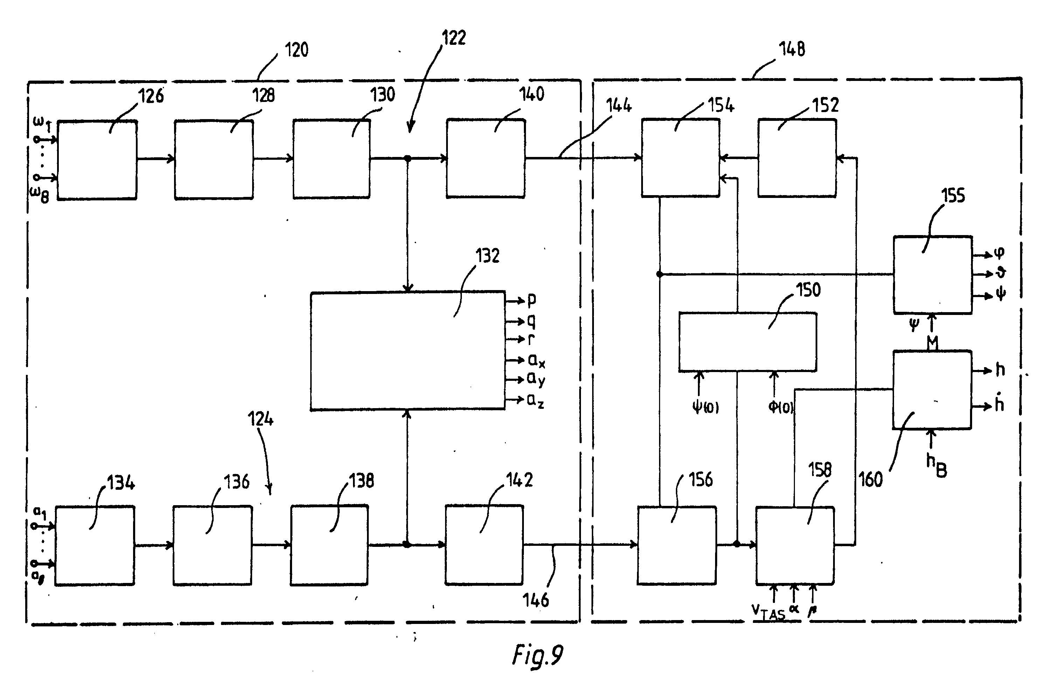

In Fig.9 ist die Verarbeitung der so von dem Sensorblock gelieferten Winkelgeschwindigkeitssignale $\omega_1$ bis $\omega_8$ und $a_1$ bis $a_8$ als Blockschaltbild dargestellt.

Den Signalverarbeitungsmitteln werden außer den erwähnten Signalen von dem Sensorblock folgende Informationen als Eingangsgrößen zugeführt:
- Barometrische Höhe $h_B$
- Fluggeschwindigkeit (True Airspeed) TAS
- magnetische Deklination
- wahrer Anfangskurs $\psi$ (0)
- geographische Breite im Ausgangspunkt $\Phi$ (0)
- Anstellwinkel $\alpha$

7

- Schiebewinkel $\beta$.
- Magnetkurs $\Psi$

Die Signalverarbeitungsmittel liefern folgende Ausgangsgrößen:
- Roll-, Nick- und Gierrate p,q,r im fahrzeugfesten Koordinatensystem,
- Längs- Quer- und Vertikalbeschleunigungen im fahrzeugfesten Koordinatensystem,
- die Eulerwinkel, nämlich Querneigung $\phi$ , Längsneigung $\vartheta$ und wahrer Kurs $\psi$
- Höhe h und
- Vertikalgeschwindigkeit h.

Es sind erste Signalverarbeitungsmittel 120 vorgesehen, denen die Signale $\omega_1$ bis $\omega_8$ und $a_1$ bis $a_8$ von dem Sensorblock zugeführt werden. Diese ersten Signalverarbeitungsmittel liefern korrigierte Winkelgeschwindigkeitssignale, nämlich die Roll-, Nick- und Gierrate p,q,r, bezogen auf ein fahrzeugfestes Koordinatensystem sowie korrigierte Beschleunigungssignale $a_x$, $a_y$, $a_z$, ebenfalls bezogen auf ein fahrzeugfestes Koordinatensystem. Diese Ausgangsgrößen werden auf einen Flugregler geschaltet und dienen der Stabilisierung des Flugzeugs.

Die ersten Signalverarbeitungsmittel 120 enthalten zwei Kanäle: Ein Kanal 122 dient der Verarbeitung der Winkelgeschwindigkeitssignale $\omega_2$ bis $\omega_8$. Ein Kanal 124 dient der Verarbeitung der Beschleunigungssignale $a_1$ bis $a_8$. In dem Kanal 122 sind Mittel 126 zur Fehlererkennung und -lokalisierung vorgesehen. Die Mittel zur Fehlererkennung für die Winkelgeschwindigkeit arbeiten nach dem Prinzip der Mehrheitsbetrachtung (Voting) wie noch beschrieben werden wird. Bei der gewählten geometrischen Anordnung der vier zweiachsigen Wendekreisel lassen sich durch Kombination der beiden Ausgangssignale der vier Kreisel vier Signale gemäß der obigen Tabelle erzeugen, die durch einfache Mehrheitsbetrachtung zur Erkennung und zur Lokalisierung eines Fehlers benutzt werden können.

Es wird jeweils mit einem ersten Satz von zwei Kreiseln gearbeitet, welche die drei Komponenten der Winkelgeschwindigkeit erfassen. Bei Auftreten eines Fehlers wird ein anderer Satz mit einer anderen Kombination von Kreiseln für die Messung herangezogen, der in einer Folge von alternativen Sätzen enthalten ist. Konkret gesagt: Es sind ein erster Winkelgeschwindigkeitssensor 248, ein zweiter Winkelgeschwindigkeitssensor 250, ein dritter Winkelgeschwindigkeitssensor 252 und ein vierter Winkelgeschwindigkeitssensor 254 vorgesehen. Bei ungestörtem Betrieb werden der erste und der zweite Winkelgeschwindigkeitssensor 248 und 250 zur Messung herangezogen. Aus den Signalen ihrer vier Eingangsachsen können die drei Komponenten der Winkelgeschwindigkeit redundant auf vier verschiedene Weisen bestimmt werden. Bei Auftreten eines Fehlers erfolgt eine Umschaltung auf andere, nicht fehlerbehaftete Winkelgeschwindigkeitssensoren. Diese Umschaltung erfolgt in der Weise, daß die Winkelgeschwindigkeitssensoren in der nachfolgenden Reihenfolge als Alternativen in Betracht gezogen werden:
- dritter und vierter Winkelgeschwindigkeitssensor 252 und 254
- erster und dritter Winkelgeschwindigkeitssensor 248 bzw. 252
- erster und vierter Winkelgeschwindigkeitssensor 248 bzw. 254
- zweiter und dritter Winkelgeschwindigkeitssensor 250 bzw. 252
- zweiter und vierter Winkelgeschwindigkeitssensor 250 bzw. 254.

In einer Schaltung 128 erfolgt eine statische und dynamische Fehlerkompensation. Die Meßsignale der Winkelgeschwinndigkeitssensoren werden nach Maßgabe der Meßmodelle der Winkelgeschwindigkeitssensoren korrigiert um die geforderte Genauigkeit für die Ausgangssignale zu erreichen. Mit 130 ist eine Koordinatentransformationsschaltung bezeichnet, durch welche die ausgewählten und korrigierten Winkelgeschwindigkeitssignale in ein fahrzeugfestes, d.h. flugzeugfestes, Koordinatensystem transformiert werden. Von einer Schaltung 132 werden daraus die Rollrate p, die Nickrate q und die Gierrate r berechnet und zur Stabilisierung an den Flugregler ausgegeben.

In ähnlicher Weise wird in dem Kanal 124 mit den Beschleunigungssignalen $a_1$ bis $a_8$ verfahren. Mit 134 sind Mittel zur Fehlererkennung und -ausschaltung bezeichnet. Dabei sind bei den Beschleunigungssignalen $a_1$ bis $a_8$ zur Feststellung eines Fehlers Linearkombinations- und Vergleichsmittel vorgesehen. Durch die Vergleichsmittel wird jedes von einem Beschleunigungssensor 256,258,260, 262,264,266,270 gemessene Beschleunigungssignal, z.B. $a_3$ des Beschleunigungssensors 260, mit einem Vergleichswert verglichen. Der Vergleichswert wird jeweils aus den Beschleunigungssignalen, z.B. $a_1$, $a_2$, $a_4$, $a_5$..,aller anderen Beschleunigungssensoren gebildet. Ein Fehler wird signalisiert, wenn die Differenz zwischen Beschleunigungssignal ($a_3$) und Vergleichswert einen vorgegebenen Schwellwert überschreitet. Es sind Lokalisierungsmittel vorgesehen. Bei Auftreten eines Fehlers wird durch diese Lokalisierungsmittel aus der Untermenge der Beschleunigungssensoren, für welche die zugehörigen Linearkombinations- und Vergleichsmittel eine Überschreitung des Schwellwertes anzeigen, der fehlerhafte Beschleunigungssensor bestimmt.

Das wird weiter unten noch im einzelnen beschrieben.

Mit 136 ist wieder eine Schaltung bezeichnet, in welcher eine statische und dynamische Fehlerkompen-

EP 0 263 777 B1

sation erfolgt. Die Meßsignale der Beschleunigungssensoren 256 bis 270 werden nach Maßgabe der Meßmodelle der Beschleunigungssensoren korrigiert, um die geforderten Genauigkeiten für die Ausgangssignale zu erreichen. Auch diese ausgewählten und korrigierten Beschleunigungssignale werden durch eine Koordinatentransformationsschaltung 138 in ein fahrzeugfestes Koordinatensystem transformiert. Von der Schaltung 132 werden die Längsbeschleunigung $a_x$, die Querbeschleunigung $a_y$ und die Vertikalbeschleunigung $a_z$ zur Stabilisierung an den Flugregler ausgegeben.

Die ersten Signalverarbeitungsmittel 120 enthalten im ersten Kanal 122 weiterhin erste Integrationsmittel 140 zur Integration der transformierten Winkelgeschwindigkeitssignale von der Koordinantentransformationsschaltung 130. Ebenso enthalten die ersten Signalverarbeitungsmittel 120 im zweiten Kanal 124 zweite Integrationsmittel 142 zur Integration der transformierten Beschleunigungssignale von der Koordinatentransformationsschaltung 138.

Die ersten Signalverarbeitungsmittel 120 ergeben an Lageausgängen 144 Transformationsparameter, die sich durch Integration von Winkelgeschwindigkeitsinformationen ergeben. Die ersten Signalverarbeitungsmittel 120 liefern an Geschwindigkeitsausgängen 146 Geschwindigkeitswerte, die sich durch Integration von Beschleunigungsinformationen $a_x$, $a_y$, $a_z$ in einem fahrzeugfesten Koordinatensystem ergeben. Zweiten Signalverarbeitungsmitteln 148 werden die ausgewählten und korrigierten Winkelgeschwindigkeits- und Beschleunigungssignale, die durch Integrationsmittel 140 bzw. 142 integriert werden, zugeführt. Die zweiten Signalverarbeitungsmittel liefern unter anderem Kurs- und Lagereferenzsignale.

Die zweiten Signalverarbeitungsmittel 148 enthalten Anfangsausrichtmittel 150 zur Bestimmung von Anfangswerten der Transformationsparameter. Die zweiten Signalverarbeitungsmittel enthalten weiterhin Mittel 152 zur Bestimmung von Korrekturwerten zur Berücksichtigung von Erddrehung und Transportrate. Es sind Korrekturmittel 154 vorgesehen zur Korrektur der Transformationsparameter, die an den Lageausgängen 144 der ersten Signalverarbeitungsmittel erscheinen, hinsichtlich Anfangswerten, Erddrehung und Transportrate. Es werden so Transformationsparameter für die Transformation von Vektoren aus einem fahrzeugfesten, d.h. flugzeugfesten, Koordinatensystem in ein erdfestes Koordinatensystem erhalten.

Die zweiten Signalverarbeitungsmittel 148 enthalten eine Koordinatentransformationsschaltung 156, die mit den korrigierten Transformationsparametern der Korrekturmittel 154 arbeitet. Durch die Koordinatentransformationsschaltung werden die Geschwindigkeitswerte, die an den Geschwindigkeitsausgängen 146 der ersten Signalverarbeitungsmittel erscheinen, in ein erdfestes Koordinatensystem transformiert. Die Anfangsausrichtmittel 150 sind von so transformierten Geschwindigkeitskomponenten beaufschlagt, die durch Integration von Beschleunigungskomponenten bei ruhendem Fahrzeug erhalten werden. Solche Beschleunigungskomponenten können nur durch die Erdbeschleunigung hervorgerufen worden sein. Die so gemessenen Geschwindigkeitskomponenten bilden somit ein Maß für die anfängliche Schräglage des Fahrzeugs und können für die Anfangsausrichtung herangezogen werden. Weiterhin sind die Anfangsausrichtmittel 150 von einer externen Anfangskursinformation $\psi$ (0) beaufschlagt. Sie erhalten auch eine Information über die anfängliche geographische Breite $\Phi$ (0).

Die korrigierten Transformationsparameter von den Korrekturmitteln 154 sind auf eine Schaltung 155 zur Berechnung und Ausgabe der Eulerwinkel $\phi$ , $\vartheta$ und $\psi$ geschaltet. Die Mittel zur Ausgabe der Eulerwinkel enthalten Mittel zur Stützung des Kurswinkels über den Magnetkurs M. Sie liefern auch die magnetische Deviation.

Die zweiten Signalverarbeitungsmittel 148 enthalten Geschwindigkeitsrechnermittel 158. Den Geschwindigkeitsrechnermitteln 158 werden die durch die Koordinatentransformationsschaltung 156 transformierten Geschwindigkeitswerte, die Fluggeschwindigkeit (True Airspeed) TAS sowie Anstellwinkel $\alpha$ und Schiebewinkel $\beta$ zugeführt. Die Geschwindigkeitsrechnermittel 158 schalten Geschwindigkeitskomponenten auf die Mittel 152 zur Bestimmung von Korrekturwerten für die Berücksichtigung der Erddrehung und Transportrate auf. Weiterhin schalten die Geschwindigkeitsrechnermittel 158. Geschwindigkeitskomponenten auf einen durch die barometrische Höhe $h_B$ gestützten Vertikalkanal 160 auf, der Flughöhe und Vertikalgeschwindigkeit liefert.

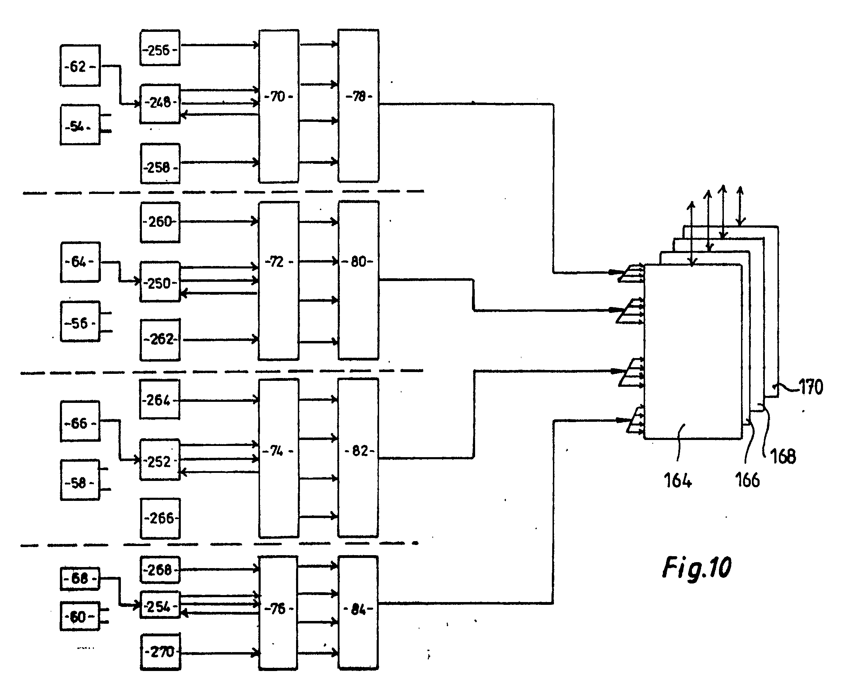

Fig.10 zeigt links den Sensorblock 162, wie er im Zusammenhang mit Fig.7 beschrieben ist. Die damit erhaltenen vier Sätze von Ausgangssignalen sind jeder parallel auf vier Signalverarbeitungsschaltungen 164,166, 168,170 geschaltet, von denen jede nach Art von Fig.9 mit ersten und zweiten Signalverarbeitungsmitteln 120,148 aufgebaut ist und Stabilisierungs- und Kurs- und Lagereferenzinformationen an einem Flugreglerrechner liefert.

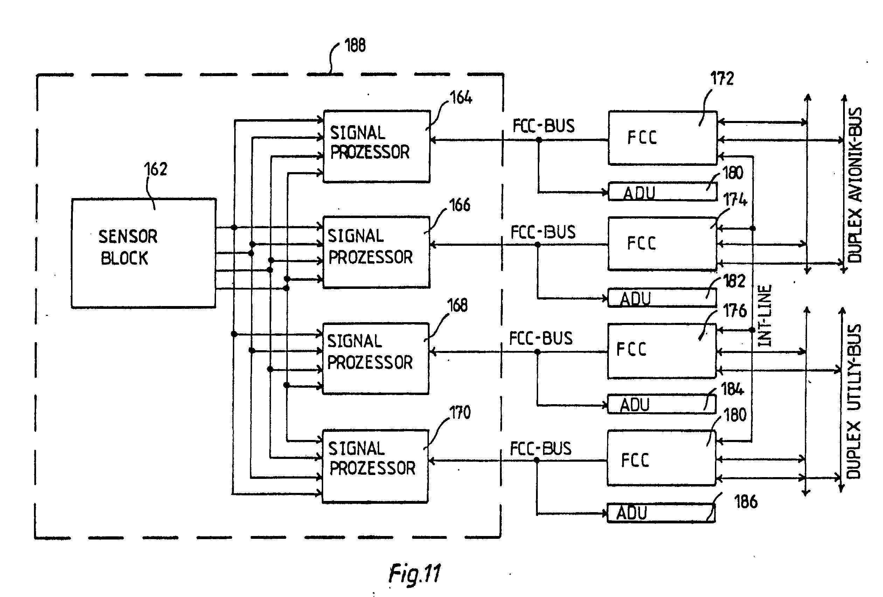

Fig.11 zeigt, wie auch der Flugreglerrechner und die ADU vermehrfacht ist. Jede der Signalverarbeitungsschaltungen 164,166, 168 und 170 liefert Daten für einen zugeordneten Flugreglerrechner 172,174,176 bzw. 178 und eine ADU 180,182,184 bzw. 186.

Das integrierte, redundante Referenzsystem enthält die in Fig.11 innerhalb der Umrandung 188 dargestellten Teile.

9

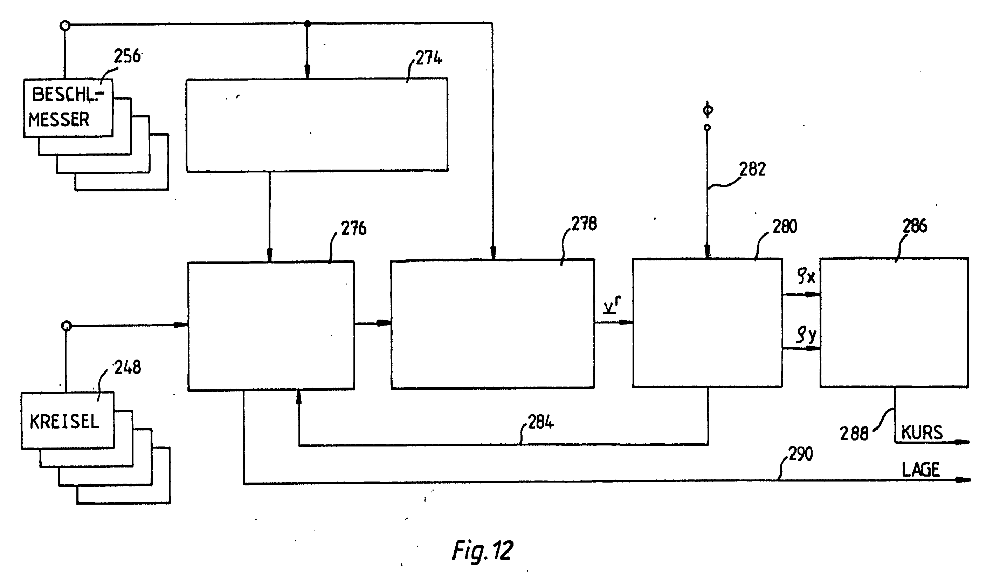

Vor dem Start erfolgt durch Schaltung 150 (Fig.9) eine Horizontierung. Das ist in Fig.12 näher dargestellt. Von den Beschleunigungssensoren werden Impulse geliefert, welche jeweils einem Geschwindigkeitsinkrement entsprechen. Nach diesen Signalen kann eine schnelle Grobhorizontierung erfolgen. Die gemessenen Beschleunigungen sind bei stillstehendem Flugzeug nur auf die Erdbeschleunigung zurückzuführen und liefern daher Meßwerte für die Anfangsneigung des Flugzeugs in Form einer anfänglichen Richtungskosinusmatrix oder einer Quaternion. Das ist durch Block 274 dargestellt. Die Winkelgeschwindigkeitssensoren liefern Impulse, welche jeweils Winkelinkrementen entsprechen. Diese werden einer durch Block 276 dargestellten, mit der Richtungskosinusmatrix von der Grobhorizontierung beaufschlagten Signalverarbeitung unterworfen zur laufenden Berechnung von neuen Kurs- und Lagewinkeln und zur Kompensation von Sensorfehlern. Mit der so laufend erhaltenen, aktuellen Richtungskosinusmatrix erfolgt eine Koordinatentransformation der Geschwindigkeitsinkremente von den Beschleunigungssensoren sowie eine Sensorfehlerkompensation der Beschleunigungssensoren. Das ist durch Block 278 dargestellt. Es wird dadurch ein inertial gemessener, auf ein erdfestes Koordinatensystem bezogener Geschwindigkeitsvektor $v^r$ erhalten. Der Geschwindigkeitsvektor $v^r$ beaufschlagt eine Schaltung 280 für eine Feinhorizontierung. Dieser Schaltung 280 wird außerdem, wie durch Eingang 282 angedeutet, die geographische Breite eingegeben. Die Schaltung 280 für die Feinhorizontierung liefert Korrekturwerte für die Richtungskosinusmatrix, welche, wie durch die Verbindung 284 angedeutet ist, bei der Signalverarbeitung gemäß Block 276 berücksichtigt wird. Die Schaltung 280 für die Feinhorizontierung liefert weiterhin "Stellsignale" $\rho_x$ und $\rho_y$, welche der Auswanderung einer "virtuellen" Plattform infolge der Komponenten der Erddrehgeschwindigkeit entgegenwirken. Wenn die Horizontale durch eine reale kardanisch aufgehängte und durch sensorgesteuerte Stellmotoren horizontal gehaltene Plattform dargestellt würde, dann würden auf die Winkelgeschwindigkeitssensoren die Komponenten der Erddrehgeschwindigkeit wirken. Diese Komponenten würden eine Verdrehung der Plattform gegenüber dem erdfesten Koordinatensystem bewirken. Lotfühler auf der Plattform würden demgegenüber Stellsignale liefern, welche die Plattform horizontal halten. Diese Stellsignale sind ein Maß für die Komponenten der Erddrehgeschwindigkeit und gestatten die Bestimmung der Nordrichtung. Bei einer Strapdown - Anordnung wird durch die Richtungskosinusmatrix eine "virtuelle" Plattform definiert. Es ergeben sich "Stellsignale" -analog den auf die Stellmotore einer realen Plattform aufgeschalteten Stellsignalen- welche diese virtuelle Plattform horizontal halten. Aus diesen Stellsignalen kann der Kurswinkel gegen Nord bestimmt werden. Die hierzu erforderliche Signalverarbeitung ist in Fig.12 durch den Block 286 dargestellt. Ein Ausgang 288 liefert den Anfangskurs, und ein Ausgang 290 von Block 276 liefert die Anfangslagewinkel.

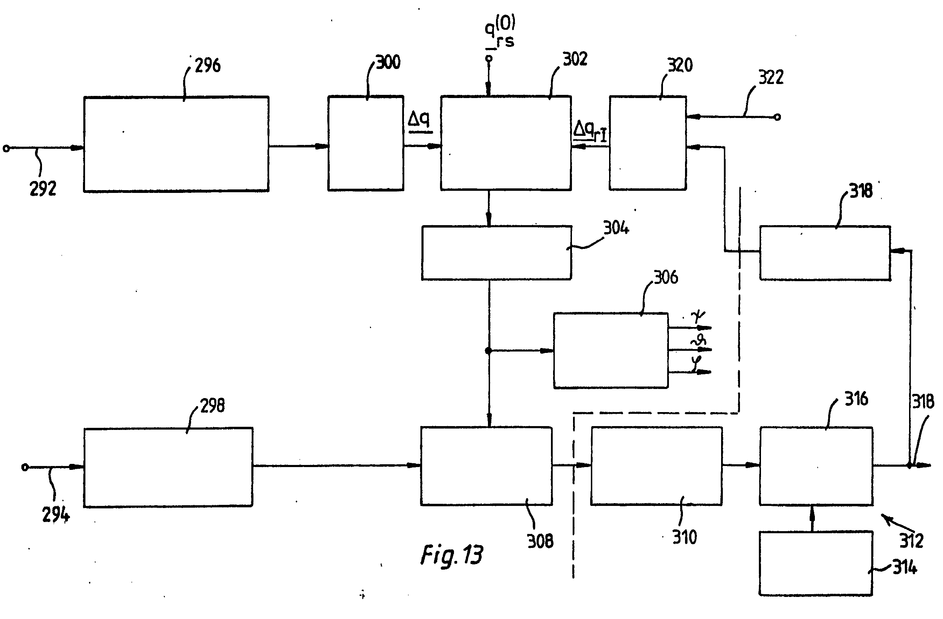

In Fig.13 ist die Feinausrichtung im einzelnen dargestellt.

An Eingängen 292 und 294 erscheinen Impulse von den Winkelgeschwindigkeitssensoren bzw. den Beschleunigungssensoren, von denen jeder ein Winkelinkrement bzw. ein Geschwindigkeitinkrement repräsentiert. Die Winkelgeschwindigkeitssignale bzw. Beschleunigungssignale werden hinsichtlich "Coning" bzw. "Sculling" und Sensorfehlern kompensiert, was durch Blöcke 296 bzw.298 dargestellt ist. es ergeben sich inkrementale Drehwinkel- bzw. Geschwindigkeitsvektoren. Der inkrementale Drehwinkelvektor wird umgewandelt in eine inkrementale Quaternion. Das ist durch Block 300 dargestellt. Damit wird ein aktueller Wert der Quaternion ausgehend von einem Anfangswert laufend korrigiert. Das ist durch Block 302 dargestellt. Der so erhaltene aktuelle Wert der Quaternion wird durch eie von Block 304 dargestellte Signalverarbeitung umgesetzt in die Richtungskosinusmatrix. Aus der Richtungskosinusmatrix werden, wie durch Block 306 dargestellt ist, die Eulerwinkel, also Kurs- und Lagewinkel $\psi$ , $\vartheta$, $\phi$ gebildet. Die Richtungskosinusmatrix bewirkt, wie durch Block 308 dargestellt ist, eine Transformation der Geschwindigkeitsinkremente aus dem Strapdown - System in ein erdfestes Koordinatensystem.

Die Geschwindigkeitsinkremente werden durch eine Schaltung 310 gefiltert und aufsummiert, so daß ein Geschwindigkeitsvektor im erdfesten Koordinatensystem erhalten wird. Dieser Geschwindigkeitsvektor ist auf ein Kalman - Filter aufgeschaltet, welches die "virtuelle Plattform" simuliert. Block 314 liefert die Verstärkungsfaktoren des Kalman - Filters 312. Block 316 veranschaulicht die Bildung eines aktuellen Zustandsvektors. Das Kalman - Filter 312 liefert Schätzwerte für die Kurs- und Lagefehler. Diese werden an einem Ausgang 318 ausgegeben. Sie ermöglichen es dem Piloten, den Fortgang der Vorausrichtung des Trägheitsnavigationssystems zu verfolgen. Der Vektor der Kurs- und Lagefehler beaufschlagt eine "Regler" 318, welcher einen Vektor von Stellsignalen liefert. Diese Stellsignale, die einer Fehlausrichtung des berechneten erdfesten Koordinatensystems gegenüber dem tatsächlichen erdfesten Koordinatensystem (oder einer Fehlausrichtung einer "virtuellen Plattform") als Stellsignale entgegenwirken, werden in eine inkrementelle Quaternion umgewandelt, was durch Block 320 dargestellt ist. Bei dieser Signalverarbeitung wird außerdem die durch die geographische Breite bestimmte Horizontalkomponente der Erddrehgeschwindigkeit benutzt, die an einem Eingang 322 eingegeben wird. Die Umwandlung erfolgt ähnlich wie die durch Block 300 dargestellte. Auch durch diese inkrementelle Quaternion wird die gemäß Block 302 gebildete aktuelle Quaternion korrigiert.

Dadurch, daß bei der Aktualisierung der Lageinformationen einmal durch die Winkelinkremente der Winkelgeschwindigkeitssensoren und zum anderen durch die "Stellsignale" der "virtuellen Plattform" mit der Quaternion gearbeitet wird und erst von der aktualisierten Quaternion auf die Richtungskosinusmatrix übergegangen wird, wird der Rechenaufwand reduziert. Die Richtungskosinusmatrix ist nämlich stark redundant, und es würde einen erhöhten Rechenaufwand erfordern, die Rechnungen von vornherein mit der Richtungskosinusmatrix durchzuführen. Für die Bildung der Eulerwinkel und die Transformation der Geschwindigkeiten ist dagegen die Richtungskosinusmatrix wieder günstiger.

Der durch die gestrichelte Linie in Fig.13 abgetrennte Teil entspricht einer "virtuellen Plattform".

Das Prinzip der Ausrichtung einer "virtuellen Plattform" bei einer Strapdown - Anordnung ist in der DE-A-3 233 612 beschrieben.

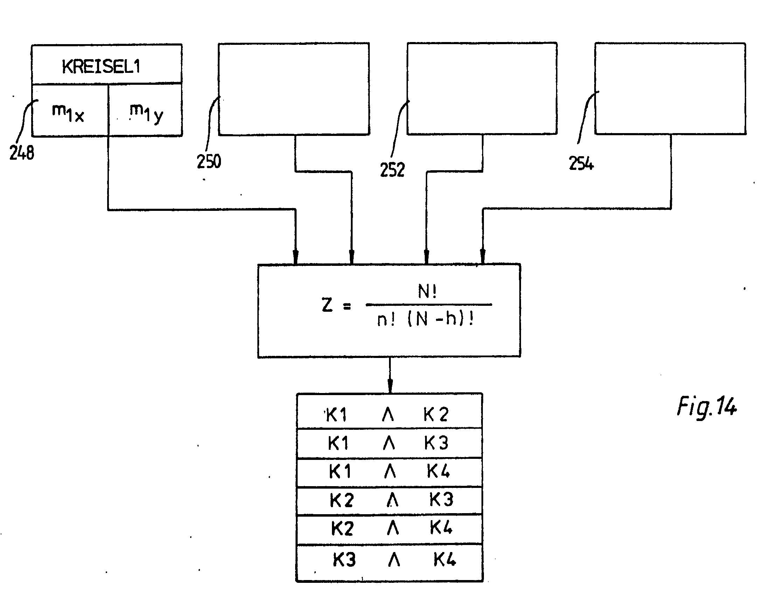

Fig.14 veranschaulicht, wie mittels vier zweiachsiger Winkelgeschwindigkeitssensoren 248,250,252 und 254 insgesamt sechs fiktive Systeme gebildet werden können, von denen jedes mit zwei zweiachsigen Winkelgeschwindigkeitssensoren die Winkelgeschwindigkeiten um drei Koordinatenachsen zu messen gestattet.

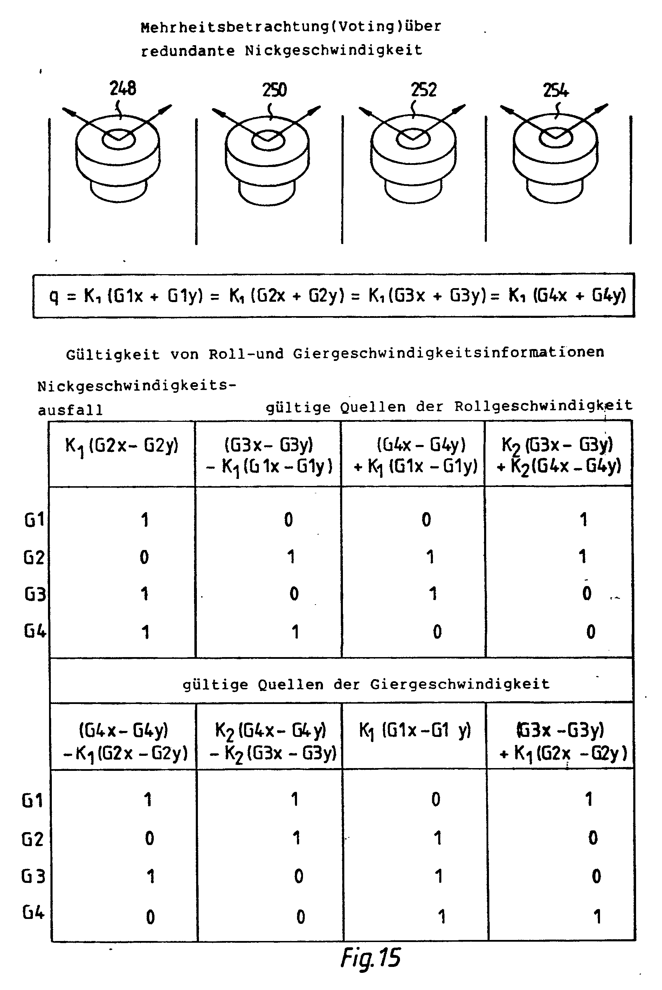

Fig.15 veanschaulicht das Prinzip der Mehrheitsbetrachtung für die Nickgeschwindigkeit. Die Nickgeschwindigkeit ist bei der Anordnung der Winkelgeschwindigkeitssensoren gemäß Fig.3 und 4 jeweils aus den beiden Signalen jedes einzelnen zweiachsigen Winkelgeschwindigkeitssensors bestimmbar. Die Nickachse $y_F$ liegt nämlich jeweils in der Ebene jedes Paares von Eingangsachsen z.B.228,230 und in der Winkelhalbierenden dieser Eingangsachsen. Es ergibt sich daher die Nickgeschwindigkeit q vierfach aus den Signalen $G_{1x}, G_{1y}$ usw. der vier Winkelgeschwindigkeitssenscren nach der in Fig.15 angegebenen Formel. Ein defekter Winkelgeschwindigkeitssensor kann dann daran erkannt werden, daß sein Nickgeschwindigkeitssignal q von einem aus den Signalen der anderen Winkelgeschwindigkeitssensoren gebildeten Signal um mehr als einen vorgegebenen Schwellwert abweicht.

In Fig.15 ist weiterhin in Tabellenform dargestellt, welche Informationen über die Winkelgeschwindigkeiten um die Rollachse und um die Gierachse (vgl. die obige Tabelle) Gültigkeit behalten, wenn die Mehrheitsbetrachtung hinsichtlich der Nickgeschwindigkeit den Ausfall eines Winkelgeschwindigkeitssensors signalisieren.

Fig.16 ist ein Blockdiagramm und veranschaulicht die Auswahl der Signale für die Bildung der Winkelgeschwindigkeitssignale. Das entspricht etwa dem Block 126 in Fig.9.

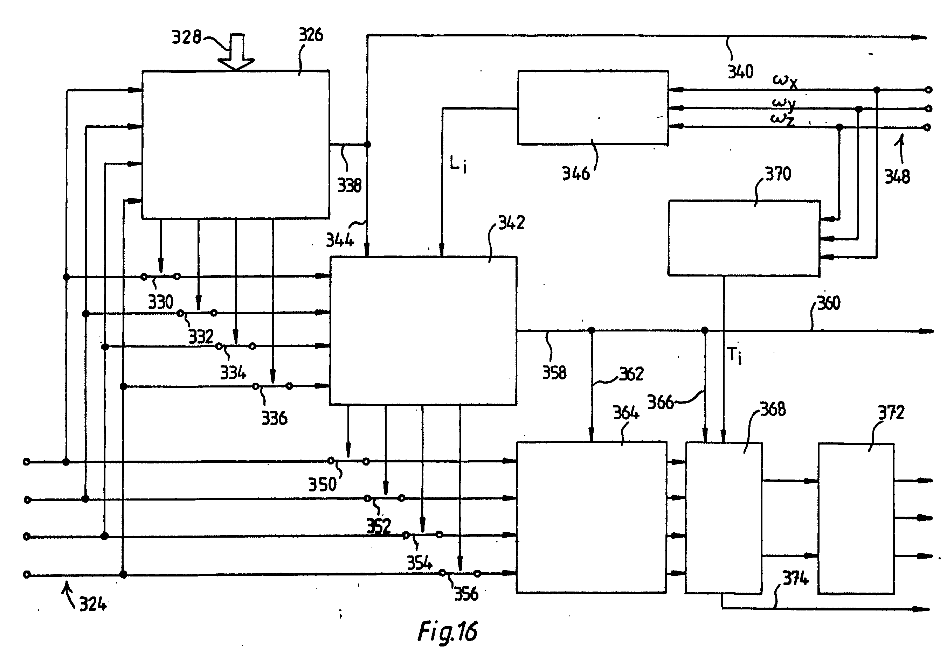

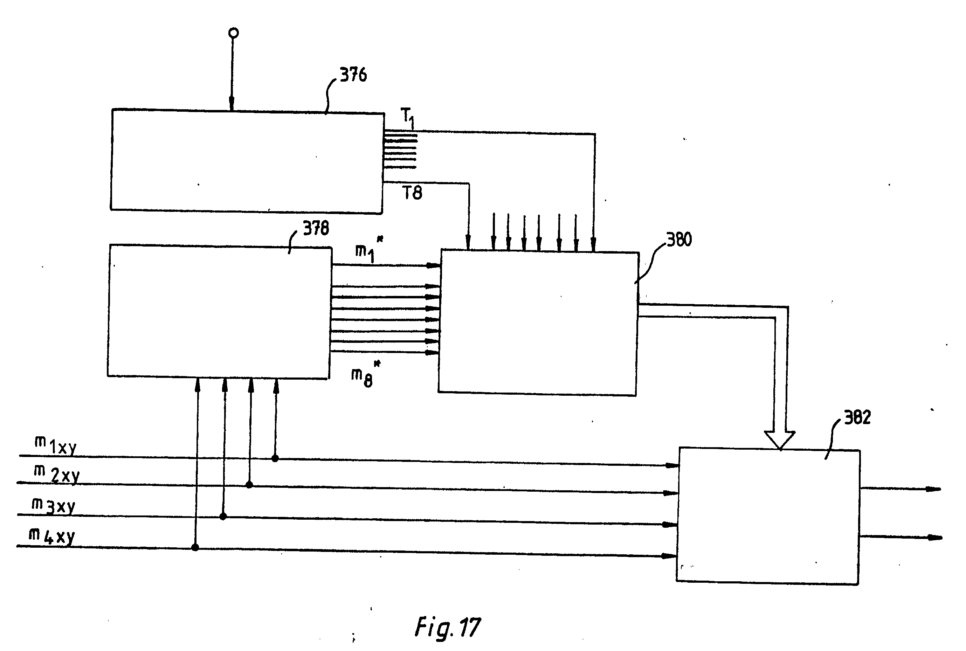

An Eingängen 324 erscheinen insgesamt acht Winkelgeschwindigkeitssignale von den vier zweiachsigen Winkelgeschwindigkeitssensoren 248,250,252,254. Diese Signale sind mit $m_{1x,y}$, $m_{2x,y}$, $m_{3x,y}$ und $m_{4x,y}$ bezeichnet. Die Signale sind auf eine Schaltung 326 aufgeschaltet. Diese Schaltung 326 ist an einem Eingang 328 von Informationen über das Ergebnis einer Selbstprüfung der Winkelgeschwindigkeitssensoren beaufschalgt. Die Selbstprüfung erfaßt beispielsweise, ob der Antriebsmotor des Kreiselrotors mit Strom versorgt wird cder die Abgriffe Versorgungsspannung erhalten oder ob der Fesselkreis des zweiachsigen Wendekreisels geschlossen ist. Die Selbstprüfung kann auch eine Prüfung umfassen, ob die Meßergebnisse vernünftig sind. Winkelgeschwindigkeitssensoren, die bei dieser Selbstprüfung als defekt erkannt werden, werden von der anschließenden Mehrheitsbetrachtung ausgeschlossen. Das ist durch Schalter 330, 332,334,336 in Fig.16 symbolisiert. Aufgrund der Selbstprüfung liefert die Schaltung 326 ein erstes Statussignal an einem Ausgang 338. Dieses Statussignal wird dem Flugregelrechner über Leitung 340 zugeführt. Die Mehrheitsbetrachtung aufgrund der Nickgeschwindigkeit, wie sie oben unter Bezugnahme auf Fig.15 erläutert wurde, erfolgt durch eine Schaltung 342 (oder eine gleichwirkende Rechenoperation im Rechner). Auf die Schaltung 342 ist über einen Eingang 344 ebenfalls das erste Statussignal aufgeschaltet. Weiterhin erhält die Schaltung 342 von einem ersten Schwellwertgenerator 346 Schwellwerte $L_i$ für die zulässigen Abweichungen eines Meßwertes z.B. vom Mittelwert aller anderen Meßwerte. Die Schwellwerte $L_i$ sind vom Absolutbetrag der Winkelgeschwindigkeiten abhängig. Deshalb ist der Schwellwertgenerator 346 von den schließlich ausgewählten und resultierenden Winkelgeschwindigkeitssignalen beaufschalgt, die vom Ausgang der Schaltung auf einen Eingang 348 geschaltet sind. Die Schaltung 342 eliminiert Meßwerte von Winkelgeschwindigkeitssensoren, deren Nickgeschwindigkeitsmeßwert von dem Mittelwert der anderen Winkelgeschwindigkeitssensoren abweicht. Das ist durch Schalter 350,352,354,356 symbolisiert. Die Schaltung 342 liefert ein zweites Statussignal an einem Ausgang 358. Das Statussignal ist über Leitung 360 auf den Flugregelrechner geschaltet. Außerdem liegt es an einem Eingang 362 einer Schaltung 364 sowie an einem Eingang 366 einer Schaltung 368 an. Die Schaltung 364 erhält die nicht-eliminierten Meßwerte $m_{1x,y}$ usw. Die Schaltung 364 bewirkt eine Kompensation verbleibender Sensorfehler bis zu einer Genauigkeit, wie sie für die Flugregelung erforderlich ist. Die so kompensierten Meßwerte werden dann auf die Schaltung 368 gegeben. Diese Schaltung 368 ist in Fig.17 im einzelnen dargestellt. Die Schaltung 368 bewirkt eine Fehlererkennung und -ausschaltung mittels eines "Defektvektors", wie noch erläutert werden wird. Auf die

Schaltung sind Schwellwerte $T_j$ von einem zweiten Schwellwertgenerator 370 aufgeschaltet. Auch die Schwellwerte $T_j$ des zweiten Schwellwertgenerators sind abhängig vom Betrag der endgültigen Winkelgeschwindigkeiten und ist daher von den Winkelgeschwindigkeiten vom Eingang 348 beaufschlagt. Durch die Schaltung 368 wird ein Satz von Winkelgeschwindigkeitswerten $\omega_{1x,y}$, $\omega_{kx,y}$.. ausgegeben. Diese Winkelgeschwindigkeitswerte sind alle brauchbar und werden von intakten Winkelgeschwindigkeitssensoren geliefert. Es kann dann nach irgendeiner Vorschrift eine Auswahl von zwei Winkelgeschwindigkeitssensoren getroffen werden, deren Signale weiterverarbeitet werden. Die Signale der ausgewählten Winkelgeschwindigkeitssensoren werden in einer Schaltung 372 nach Maßgabe der Geometrie so kombiniert, daß drei Winkelgeschwindigkeiten $\omega_x$, $\omega_y$, $\omega_z$ um zueinander orthogonale Achsen erhalten werden. An einem Ausgang 374 wird der Defektvektor ausgegeben.

In Fig.17 ist die Fehlererkennung und -ausschaltung mittels eines "Defektvektors" im einzelnen dargestellt.

Eine Schaltung 376 erhält als Eingangssignale den Vektor der Winkelreschwindigkeiten in einem flugzeugfesten Koordinatensystem und den Vektor der Beschleunigungen, ebenfalls in einem flugzeugfesten Koordinatensystem. Die Schaltung 376 berechnet daraus einen Satz von acht missionsabhängigen Schwellwerten $T_1$ bis $T_8$. Die Meßwerte $m_{1x,y}$, $m_{2x,y}$, $m_{3x,y}$, $m_{4x,y}$ sind auf eine Schaltung 378 aufgeschaltet. Die Schaltung 378 berechnet die Restwerte der Messungen, nämlich die Abweichungen der einzelnen Meßwerte von einer aus allen übrigen Meßwerten gebildeten Größe, beispielsweise dem Mittelwert aller aus den übrigen Meßwerten gebildeten, diesem Meßwert entsprechenden Werten. Die so gebildeten acht "Restwerte" $m^*_1$ bis $m^*_8$ sind auf eine Schaltung 380 aufgeschaltet. Auf die Schaltung 380 sind auch die acht Schwellwerte $T_1$ bis $T_8$ aufgeschaltet. Die Schaltung 380 berechnet daraus einen "Defektvektor" d in Abhängigkeit davon, welche Restwerte die zugehörigen Schwellwerte überschreiten. Dieser Defektvektor ist ein logischer Vektor bestehend aus den Werten "0" oder "1". Dieser Defektvektor ist auf eine Logikschaltung 382 aufgeschaltet. Die Logikschaltung wählt nach Maßgabe des Defektvektors d aus den aufgeschalteten Meßwerten $m_{1x,y}$ usw. einen Satz von gültigen Meßwerten für die Weiterverarbeitung aus.

Die Fehlererkennung mittels des "Defektvektors" unterscheidet sich wesentlich von der Mehrheitsbetrachtung gemäß Schaltung 342 in Fig.16. Dort wird von den verschiedenen Winkelgeschwindigkeitssensoren 248 bis 254 ein und dieselbe Größe gemessen, und es werden diese Meßergebnisse verglichen. Bei der Bildung des Defektvektors wird dagegen jede Meßgröße mit einer Größe gleicher Art verglichen, die aus allen anderen Meßgrößen gebildet wird. Es wird also beispielsweise die Winkelgeschwindigkeit um die Eingangsachse 228 (Fig.4) einmal als Linearkombination der Winkelgeschwindigkeiten um die Eingangsachsen 236 und 242 und zum anderen als Linearkombination der Winkelgeschwindigkeiten um die Eingangsachsen 238 und 240 dargestellt und aus den so erhaltenen Werten der Mittelwert gebildet. Der Restwert wäre dann die Differenz des Meßwertes von der Eingangsachse 228 und dieses Mittelwertes.

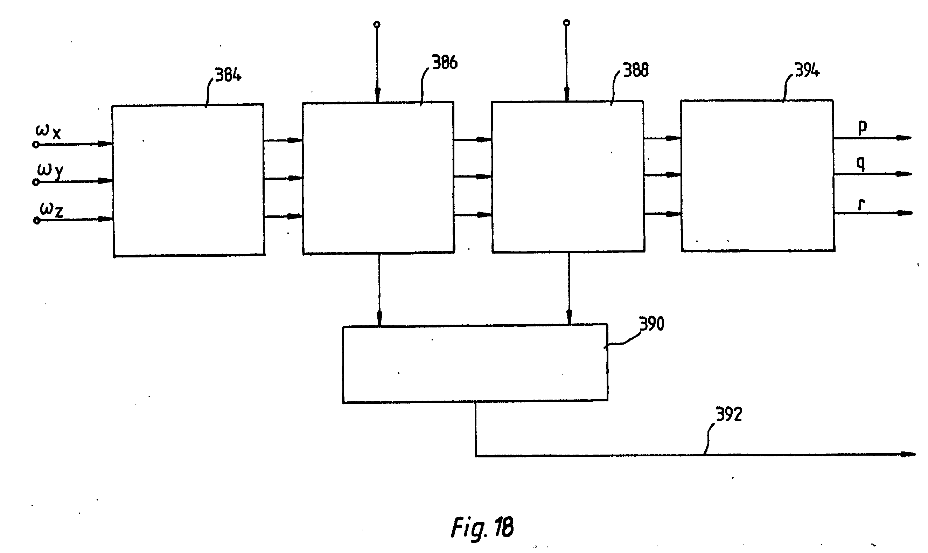

Fig.18 ist ein Blockdiagramm und zeigt die Weiterverarbeitung der von den Winkelgeschwindigkeitssensoren gelieferten und gemäß Fig.16 ausgewählten Signale zur Erzeugung der drei die Winkelgeschwindigkeiten um die flugzeugfesten Achsen wiedergebenden Signale.

Die gemäß Fig.16 erhaltenen drei Signale $\omega_x$, $\omega_y$, $\omega_z$ werden auf ein erstes Anti - Aliasing - Filter 384 gegeben. Die Ausgangssignale des Anti - Aliasing - Filters 384 werden nacheinander auf Notchfilter 386 und 388 für etwa 8 Hertz bzw. etwa 60 Hertz gegeben. Diese Notchfilter eliminieren Eigenschwingungsfrequenzen des Flugzeugs, die bei der Flugregelung zu Instabilitäten führen können. Die Notchfilter erhalten einen Notchfilter-Koeffizienten von dem Flugregelrechner. Die Notchfilter 386 und 388 werden von einer Notchfilterüberwachung 390 überwacht. Die Notchfilterüberwachung 390 liefert über eine Leitung ein Statussignal. Den Notchfiltern 386 und 388 ist ein weiteres Anti - Aliasing - Filter 394 nachgeschaltet. Das Anti - Aliasing -Filter 394 liefert die verarbeitbaren Winkelgeschwindigkeiten p,q und r um Längs-, Nick- und Hochachse.

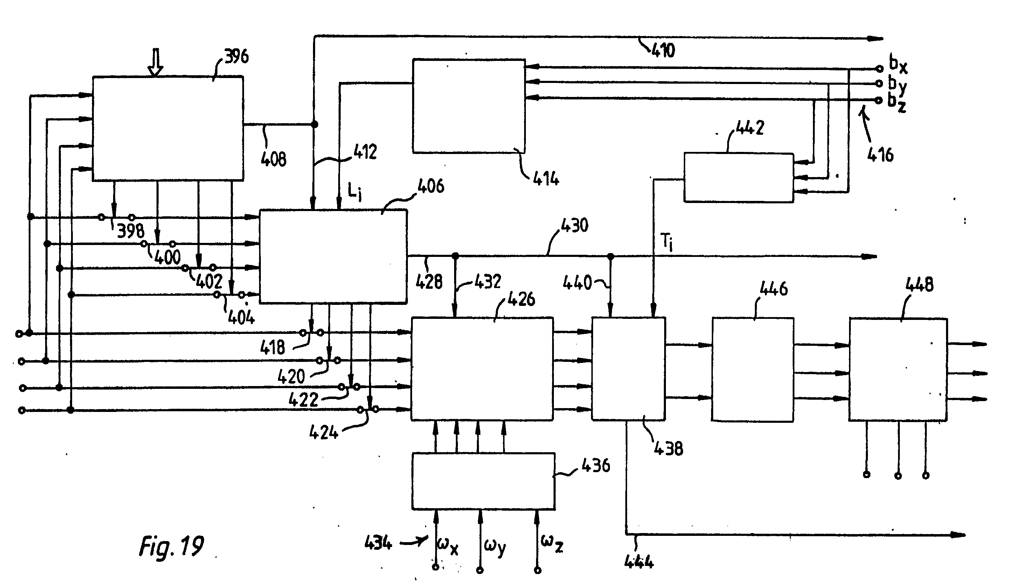

Fig.19 ist ein Blockdiagramm und zeigt die Fehlererkennung und -ausschaltung für die Beschleunigungen. Von den vier Baugruppen 212,214,216 und 218 werden insgesamt vier Paare von Beschleunigungsmeßwerten geliefert. Diese Paare sind mit $b_{1x,y}$, $b_{2x,y}$, $b_{3x,y}$ und $b_{4x,y}$ bezeichnet. Auch hier erfolgt eine Selbstprüfung einschließlich einer Prüfung, ob die erhaltenen Meßwerte vernünftig sind, durch eine Schaltung 396. Beschleunigungsmeßwerte, die sich bei dieser Selbstprüfung als fehlerhaft erweisen, werden eliminiert. Das ist in Fig.19 durch Schalter 398,400,402, 404 symbolisiert. Eine Schaltung 406 nimmt einen Mehrheitsbetrachtung anhand der von den verschiedenen Baugruppen 212 bis 218 gelieferten Werte für die Querbeschleunigung des Flugzeugs vor, also der Beschleunigung in Richtung der $y_F$-Achse. Die Schaltung 396 liefert ein erstes Statussignal an einem Ausgang 408. Dieses erste Statussignal ist über eine Leitung 410 auf den Flugregelrechner geschaltet und liegt an einem Eingang 412 der Schaltung 406 für die Mehrheitsbetrachtung an. Dieser Schaltung 406 werden außerdem Schwellwerte $L_j$ von einem ersten Schwellwertgenerator 414 zugeführt. Die Schwellwerte hängen von den Beschleunigungen $b_x$,$b_y$,$b_z$ ab, die sich schließlich für die drei flugzeugfesten Achsen ergeben. Diese Beschleunigungen sind daher über einen Eingang 416 auf den Schwellwertgenerator aufgeschaltet. Die Schwellwerte hängen weiterhin von den Hebelarmen ab, an denen die Beschleunigungssensoren in bezug auf den Schwerpunkt des Flugzeugs sitzen. Diese Hebelarme werden in dem Schwellwertgenerator 414 ebenfalls berücksichtigt. Die Schaltung 406 eliminiert die Meßwerte derjenigen Baugruppe 212 bis 218, deren Querbeschleunigungsmeßwert vom Mittelwert der anderen Baugruppen um mehr als den Schwellwert abweicht. Die Meßwerte von Baugruppen 212 bis 218, die schon bei der Selbstprüfung eliminiert wurden, werden dabei nicht berücksichtigt. Die Eliminierung von Meßwerten ist durch Schalter 418,420,422,424 symbolisiert.

Die verbleibenden Meßwertpaare $b_{1,x,y}$, usw. sind dann auf eine Schaltung 426 aufgeschaltet. Die Schaltung 426 bewirkt eine Kompensation der Sensorfehler auf die für die Flugregelung erforderliche Genauigkeit.

Die Schaltung 406 für die Mehrheitsbetrachtung liefert ein zweites Statussignal an einem Ausgang 428.Dieses zweite Statussignal ist über eine Leitung 430 auf den Flugregelrechner geschaltet. Das zweite Statussignal liegt auch an einem Eingang 432 der Schaltung 426 an.

Weiterhin erfolgt in der Schaltung 426 eine Hebelarmkompensation. Zu diesem Zweck sind die Winkelgeschwindigkeiten $\omega_x$, $\omega_y$, $\omega_z$ an einem Eingang 434 auf die Schaltung von Fig.19 aufgeschaltet. Diese Winkelgeschwindigkeiten werden in einer Schaltung 436 mit Hebelarmen multipliziert, Die Schaltung 436 liefert damit Korrekturwerte für die Beschleunigungsmeßwerte. Eine Winkelgeschwindigkeit täuscht ja an einem Bescheunigungssensor, der im Abstand vom Schwerpunkt des Flugzeuges sitzt, eine Beschleunigung vor. Diese scheinbare Beschleunigung muß kompensiert werden, um die Beschleunigung des Flugzeugschwerpunktes zu erhalten.

Die so kompensierten Beschleunigungsmeßwerte sind dann auf eine Schaltung 438 zur Fehlererkennung und -auschaltung auf der Grundlage eines "Defektvektors" aufgeschaltet. Diese Schaltung erhält das zweite Statussignal an einem Eingang 440. Weiterhin erhält die Schaltung 438 Schwellwerte $T_i$ von einem zweiten Schwellwertgenerator 442. Der zweite Schwellwertgenerator ist von den Beschleunigungsmeßwerten vom Eingang 416 beaufschlagt.

Die Schaltung 438 ist im Prinzip genau so aufgebaut wie die Schaltung von Fig.17 und ist daher nicht noch einmal im einzelnen beschrieben. Die Schaltung 438 gibt an einem Ausgang 444 den Defektvektor für die Beschleunigungen aus. Sie liefert im übrigen einen Satz von ausgewählten Beschleunigungsmeßwerten $b_{1x,y}$ und $b_{kx,y}$, die von zwei intakten Baugruppen 212 usw. geliefert werden. Aus diesen Beschleunigungsmeßwerten werden in einer Schaltung 446 die Beschleunigungen $b_x$,$b_y$ und $b_z$ in Richtung der drei flugzeugfesten Koordinatenachsen bestimmt.Eine Schaltung 448, welcher ebenfalls die Winkelgeschwindigkeiten um die drei flugzeugfesten Koordinatenachsen zugeführt werden, bewirkt eine Momentenarmkompensation und liefert drei Ausgangssignale $a_x$, $a_y$ und $a_z$ entsprechend den Beschleunigungen in Richtung der flugzeugfesten Koordinatenachsen für die Flugregelung.

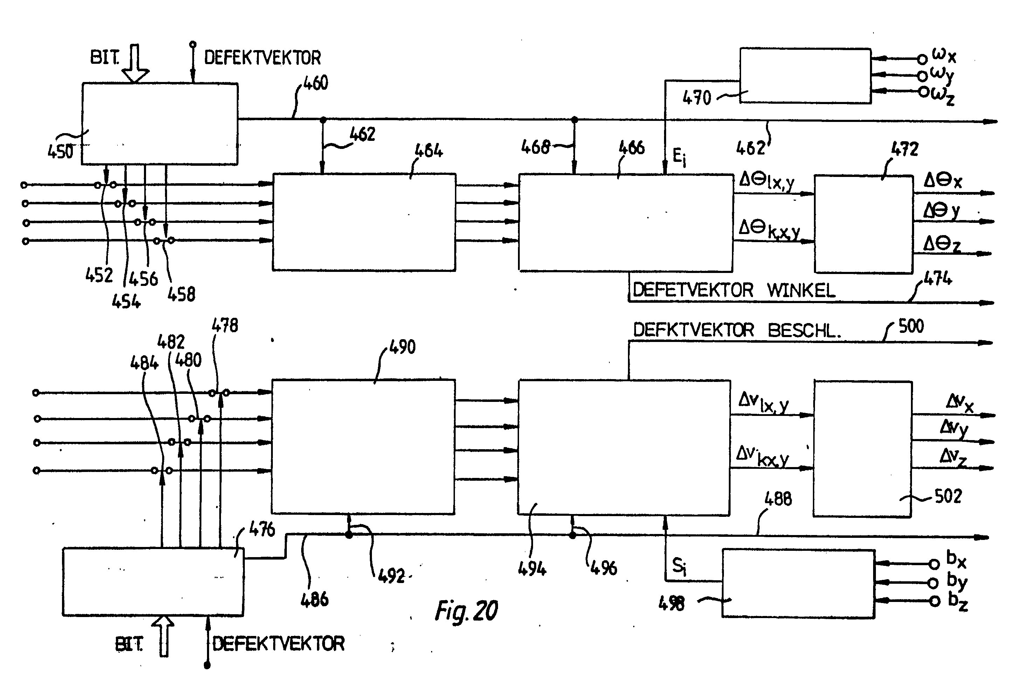

Fig.20 ist ein Blockdiagramm und veranschaulicht die Auswahl der Signale für die Kurs - Lage - Referenz.

Die Winkelgeschwindigkeitssensoren 248 bis 254 liefern Winkelinkrementsignale $\Delta\theta_{1x,y}$,$\Delta\theta_{2x,y}$,$\Delta\theta_{3x,y}$ und$\Delta\theta_{4x,y}$. Die Winkelgeschwindigkeitssensoren 248 bis 254 sind wieder einer Selbstprüfung unterworfen, wie durch Block 450 dargestellt ist. Dabei werden Daten von der Selbstprüfung z.B. der Stromversorgung verarbeitet (BIT) sowie der Defektvektor, der bei der Auswahl der Winkelgeschwindigkeitsmeßwerte für die Flugregelung (Fig.16) auftrat. Dementsprechend werden Meßwerte von defekten Winkelgeschwindigkeitssensoren 248 bis 254 eliminiert. Das ist wieder durch Schalter 452,454,456,458 symbolisiert. Die Schaltung 450 liefert ein Statussignal an einem Ausgang 460, das über eine Leitung 462 auf den Flugregelrechner aufgeschaltet ist. Das Statussignal liegt auch an einem Eingang 462 einer Schaltung 464 an. Die Sensorfehler der nicht-eliminierten Winkelinkrementsignale werden in der Schaltung 464 auf die für die Kurs - Lage - Referenz erforderliche Genauigkeit kompensiert. Die auf diese Weise kompensierten Winkelinkrementsignale werden dann in einer Schaltung 466 einer Auswahl mittels der in Fig. 17 dargestellten Bildung eines Defektvektors unterworfen. Der Defektvektor wird dabei für die aufsummierten Winkelinkremente gebildet. Die Schaltung 466 erhält das Statussignal an einem Eingang 468 und Schwellwerte $E_i$ von einem Schwellwertgenerator 470. Auf den Schwellwertgenerator 470 sind die Winkelgeschwindigkeiten $\omega_x$, $\omega_y$ und $\omega_z$ aufgeschaltet.

Die Schaltung 466 wählt die Winkelinkrementsignale $\Delta\theta_{1x,y}$ und $\Delta\theta_{kx,y}$ von zwei der Baugruppen 212 bis 218 aus. Diese werden auf eine Schaltung 472 aufgeschaltet, welche drei Winkelinkrementsignale $\Delta\theta_x$, $\Delta\theta_y$ und $\Delta\theta_z$ bildet, welche Drehungen um die flugzeugfesten Koordinatenachsen darstellen.

Der Defektvektor für den Winkel wird von der Schaltung 466 an einem Ausgang 474 ausgegeben.

In ähnlicher Weise ist der Kanal für die Signale der Beschleunigungssensoren aufgebaut.

Die Beschleunigungssensoren liefern Geschwindigkeitsinkrementsignale $\Delta v_{1x,y}$, $\Delta v_{2x,y}$, $\Delta v_{3x,y}$ und $\Delta v_{4x,y}$.Diese Geschwindigkeitsinkrementsignale werden durch eine Schaltung 476 einer Selbstprüfung unter Berücksichtigung von Selbstprüfungsinformationen (BIT) und des für die Beschleunigungsmeßwerte für die Flugregelung erhaltenen Defektvektors unterworfen. Beschleunigungsmeßwerte von defekten Baugruppen 212 bis 218 werden eliminiert. Das ist durch Schalter 478,480,482,484 symbolisiert. Die Schaltung 476 liefert ein Statussignal an einem Ausgang 486, das über eine Leitung 488 auf den Flugregelrechner aufgeschaltet ist.

Die nicht-eliminierten Beschleunigugnsmeßwerte sind auf eine Schaltung 490 aufgeschaltet. Diese Schaltung bewirkt die Kompensation restlicher Sensorfehler auf die für die Kurs - Lage - Referenz erforderliche Genauigkeit sowie eine Kompensation der Hebelarme. Die Schaltung 490 erhält auch das Statussignal von der Schaltung 476 an einem Eingang 492. Die so kompensierten Beschleunigungsmeßwerte sind auf eine Schaltung 494 geschaltet. Diese Schaltung bewirkt wieder eine Fehlererkennung und -ausschaltung durch Bildung eines Defektvektors, wie sie im Zusammenhang mit Fig.17 schon beschrieben wurde. Der Defektvektor wird anhand der aufsummierten Geschwindigkeitsinkremente gebildet. Die Schaltung 494 erhält ebenfalls des Statussignal von der Schaltung 476 an einem Eingang 496. Weiterhin erhält die Schaltung Schwellwerte $S_i$ von einem Schwellwertgenerator 498. Auf den Schwellwertgenerator sind die Beschleunigungssignale $b_x, b_y$ und $b_z$ aufgeschaltet. Die Schaltung 494 gibt den Defektvektor dieser Beschleunigungsmessung an einem Ausgang 500 aus.

Die Schaltung 494 wählt zwei der Baugruppen 212 bis 218 aus, deren Geschwindigkeitsinkrementsignale $\Delta v_{1x,y}$ und $\Delta v_{lx,y}$ weiterverarbeitetwerden. Diese sind auf eine Schaltung 502 geschaltet, welche daraus Meßwerte für die Geschwindigkeitsinkremente $\Delta v_x$, $\Delta v_y$ und $\Delta v_z$ bezogen auf die drei flugzeugfesten Koordinatenachsen bildet.

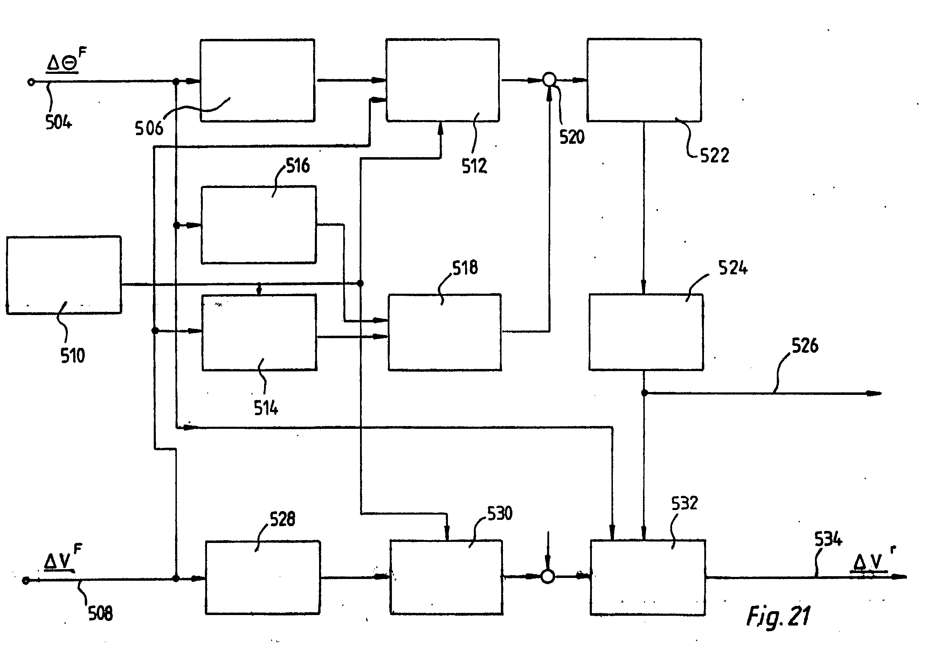

Die von der Schaltung nach Fig.20 erhaltenen Winkel- und Geschwindigkeitsinkrementsignale dienen für die "Strapdown" - Rechnung gemäß Fig.21.

Die Winkelinkrementmeßwerte an einem Eingang 504, der dem betreffenden Ausgang von Fig.20 entspricht, werden aufsummiert, wie durch Block 506 dargestellt ist. Die aufsummierten Winkelinkrementsignale werden zusammen mit den Geschwindigkeitsinkrementsignalen von einem Eingang 508 und einem Temperatursignal von einem Temperaturfühler 510 auf ein erstes Kreiselfehlermodell 512 aufgeschaltet. Das Kreiselfehlermodell 512 liefert korrigierte Winkelinkrementsignale. Die Geschwindigkeitsinkrementsignale vom Eingang 508 sind weiterhin auf ein zweites Kreiselfehlermodell 514 geschaltet, welches die Anisoelastizität der Kreisel berücksichtigt. Weiterhin werden die Winkelinkrementsignale vom Eingang 504 benutzt zu einer "Coning"-Kompensation 1.Ordnung, wie durch Block 516 dargestellt ist. Sowohl das zweite Kreiselfehlermodell 514 als auch der Block 516 liefern inkrementale Korrektursignale, die gemäß Block 518 aufsummiert werden und eine Korrektur der Winkelinkrementsignale von dem ersten Kreiselfehlermodell 512 in einem Summationspunkt 520 bewirken. Diese korrigierten Winkelinkrementsignale dienen zur Aktualisierung einer Quaternion, was durch Block 522 dargestellt ist. Die Quaternion wird, wie durch Block 524 dargestellt ist, in die Richtungskosinusmatrix umgesetzt. Die Elemente der Richtungskosinusmatrix werden an einem Ausgang 526 ausgegeben.

Die Geschwindigkeitsinkrementsignale am Eingang 508 sind in dem flugzeugfesten Koordinatensystem gemessen. Sie werden, wie durch Block 528 für die Beschleunigungsmesser zugeführt. Das Fehlermodell 530 erhält auch das Temperatursignal von dem Temperaturfühler 510. Die nach dem Fehlermodell korrigierten Geschwindigkeitsinkrementsignale werden dann einer durch Block 532 dargestellten Koordinatentransformation unterworfen. Diese Koordinatentransformation erfolgt mit der Richtungskosinusmatrix von Block 524 und nach Maßgabe der Winkelinkrementsignale am Eingang 504. Es wird so an einem Ausgang 534 ein Vektor von Geschwindigkeitsinkrementsignalen erzeugt, die auf ein erdfestes Koordinatensystem bezogen sind.

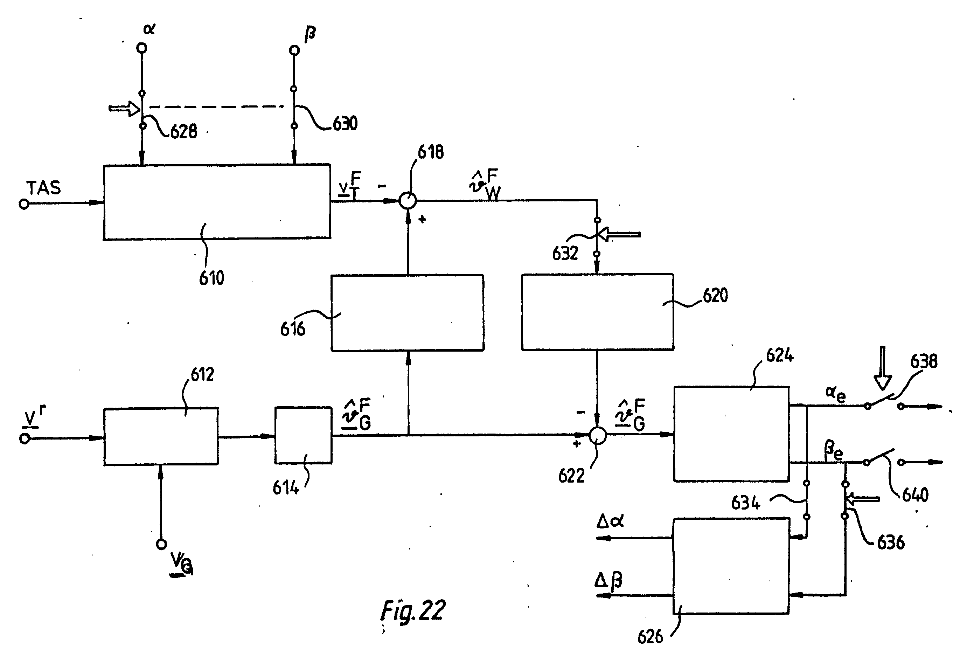

Fig.22 ist ein Blockdiagramm und zeigt einen Weg zur Bestimmung von Anstell- und Schiebewinkel aus Daten des Trägheitsnavigationssystems für den Notfall bei Ausfall der aerodynamischen Sensoren für diese Winkel.

Referenzsysteme der vorliegenden Art mit redundanter Signalerzeugung und -verarbeitung werden vornehmlich bei Flugzeugen geringer Eigenstabilität verwendet, für welche das Fuktionieren der Flugregelung lebenswichtig ist. Für solche Flugzeuge sind zwei weitere Größen sehr entscheidend, nämlich der Anstellwinkelund der Schiebewinkel. Anstell- und Schiebewinkel werden üblicherweise durch aerodynamische Sensoren unmittelbar gemessen. Wegen der Bedeutung dieser Größen sind die Sensoren auch vermehrfacht. Dieser Vermehrfachung sind jedoch Grenzen gesetzt, da die Sensoren nur an ganz bestimmten Stellen des Flugzeugs angebracht werden können. So sind in der Regel maximal drei solcher aerodynamischer Sensoren für Anstell-und Schiebewinkel vorgesehen. Damit läßt sich aber nicht der geforderte Grad von Sicherheit "fail-operational, fail-operational, fail safe" erreichen. Die Anordnung nach Fig.22 gestattet es, bei Ausfall der aerodynamischen Sensoren wenigstens für eine begrenzte Zeit aus dem Trägheitsnavigationssystem Meßwerte für Anstell- und Schiebewinkel zur Verfügung zu stellen, die u.U. zu einer Landung ausreichen.

Im Normalfall wird die "True Airspeed" TAS, also die Geschwindigkeit des Flugzeugs gegenüber der umgebenden Luft anhand der zur Verfügung stehenden Werte von Anstellwinkel $\alpha$ und Schiebewinkel $\beta$ in das flugzeugfeste Koordinatensystem transformiert, was durch Block 610 dargestellt ist. Es ergibt sich ein Geschwindigkeitsvektor $v_T{}^F$. Aus dem Trägheitsnavigationssystem wird eine Geschwindigkeit über Grund erhalten, die durch einen Vektor $v_G$ dargestellt ist. Aus dem beschriebenen Referenzgerät wird ein weiterer Geschwindigkeirsmeßwert $v^r$ erhalten. Durch ein Geschwindigkeitsfilter 612 wird daraus ein optimaler Schätzwert für die Geschwindigkeit des Flugzeugs über Grund im erdfesten Koordinatensystem gebildet. Dieser Schätzwert wird mittels der von dem vorliegenden Referenzgerät gelieferten Richtungskosinusmatrix, dargestellt durch Block 614 in einen Schätzwert $v_G{}^F$ der Geschwindigkeit über Grund gemessen im flugzeugfesten Koordinatensystem transformiert. Nach einer Anpassung, die durch einen Block 616 dargestellt ist, können die beiden, auf das gleiche flugzeugfeste Koordinatensystem bezogenen Geschwindigkeiten, wiedurch Summationspunkt dargestellt ist, voneinander subtrahiert werden. Es ergibt sich dann die Windgeschwindigkeit im flugzeugfesten Koordinatensystem gemessen.

Diese Windgeschwindigkeit wird in einem Register 620 gespeichert.

Aus der Windgeschwindigkeit und dem Schätzwert der Geschwindigkeit über Grund kann nun wieder in einem Summationspunkt 622 ein Schätzwert für die True Airspeed gewonnen werden. Aus diesem Schätzwert $v_T{}^F$ können Schätzwerte $\alpha_e$ und $\beta_e$ für die Anstell- und Schiebewinkel berechnet werden. Das ist durch Block 624 dargestellt.

Im Normalbetrieb werden diese Schätzwerte nach Zeit- und Phasenanpassung und Vergleich, dargestellt durch Block 626 für die Überprüfung des beschriebenen Kreises verwendet. Es kann dadurch sichergestellt werden, daß in dem Register 620 tatsächlich ständig der Vektor der Windgeschwindigkeit gespeichert ist.

Wenn nun die aerodynamischen Sensoren nicht mehr oder nicht mehr eindeutig die Anstell- und Schiebewinkel liefern, was von dem Flugregelrechner festgestellt wird, dann erfolgt eine Umschaltung, die in Fig.22 durch verschiedene Schalter dargestellt ist. Bei Ausfall der Anstellwinkel - und Schiebewinkel - Sensoren gehen alle Schalter in die der dargestellten Stellung entgegengesetzte Schaltstellung: Schalter 628 und 630 öffnen. Dadurch werden die fehlerhaften Meßwerte der Anstell-und der Schiebewinkel nicht mehr aufgeschaltet. Schalter 632 öffnet. Damit werden keine falschen Werte der Windgeschwindigkeiten in das Register 620 eingelesen. Das Register 620 speichert weiterhin den letzten "richtigen" Wert. Die Schalter 634 und 636 öffnen. Es erfolgt keine Überprüfung mit den aerodynamisch gemessenen Werten. Schalter 638,640 schließen. Die Schätzwerte $\alpha_e$ und $\beta_e$ von Anstellwinkel und Schiebewinkel werden auf den Flugregelrechner aufgeschaltet.

Der Flugregelrechner erhält nun die Schätzwerte von Anstellwinkel und Schiebewinkel unter der Annahme, daß der Wind seine bisherige Stärke und Richtung beibehält und dem gespeicherten Wert der Windgeschwindigkeit entspricht. Diese Schätzwerte sind im allgemeinen für eine Weile brauchbar und können eine Landung ermöglichen.

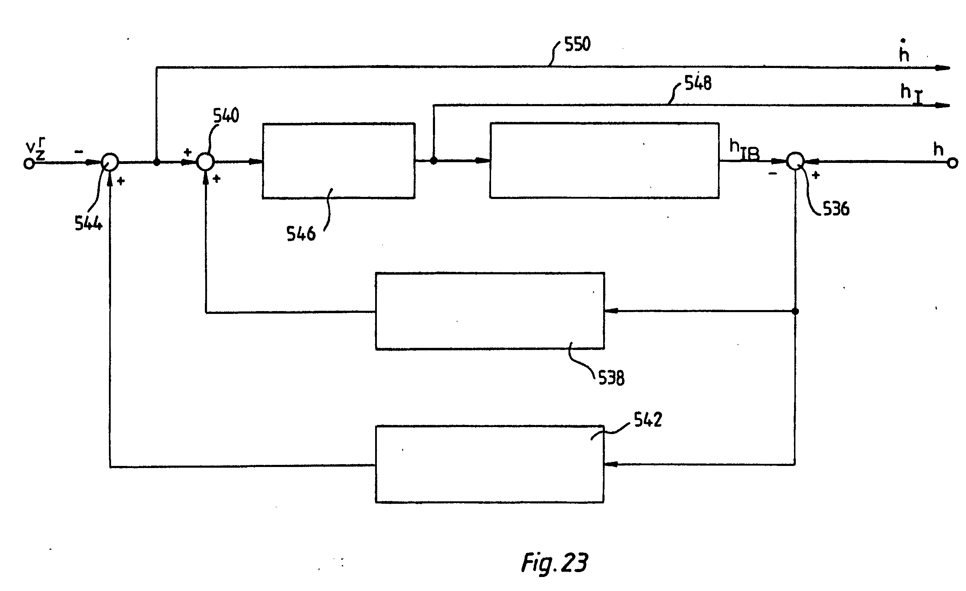

Fig.23 zeigt den Vertikalkanal 160 von Fig.9

Der Vertikalkanal erhält einmal die Vertikalgeschwindigkeit im erdfesten Koordinatensystem $v_z{}^r$ von der Koordinatentransformationsschaltung 156 in Fig.9 bzw. 532 in Fig.21. Zum anderen erhält der Vertikalkanal die barometrische Höhe $h_B$. Der barometrischen Höhe $h_B$ wird an einem Summationspunkt 536 eine Größe $h_{IB}$ "entgegengeschaltet". Die Differenz wird einmal in einem proportionalen Rückführkreis 538 auf einen Summationspunkt 540 übertragen und zum anderen über einen integrierenden Rückführkreis 542 auf einen Summationspunkt 544. Im Summationspunkt 544 ist der integrierten Differenz die Vertikalgeschwindigkeit "entgegengeschaltet". Die Differenz vom Summationspunkt 544 wird dem Signal in dem proportionalen Rückführkreis 538 im Summationspunkt 540 überlagert. Die Summe vom Summationspunkt 540 wird durch integrierende Mittel 546 integriert. Das Integral liefert über ein Tiefpaßfilter 1.Ordnung das besagte Signal $h_{IB}$.

Die Struktur stellt eine Art "Regelkreis" dar, in welchem die Größe $h_{IB}$, die ein gedämpftes Höhensignal darstellt, auf den Wert der barometrischen Höhe geregelt wird und die Differenz an dem Summationspunkt 536 verschwindet. Dann liefert die integrierende Rückführung eine konstante Korrektur der Geschwindigkeit. Die proportionale Rückführung ist null. Die Integration durch die Integrationsmittel 546 liefert die Höhe $h_I$, während am Summationspunkt 544 die Höhenänderung h erscheint, also die Vertikalgeschwindigkeit gestützt durch die barometrische Höhe. Höhe h und Höhenänderung h werden an Ausgängen 548 und 550 ausgegeben.

Fig.24 zeigt die Software-Struktur des Rechners der Trägheitsnavigationsanlage.

Mit 212 ist eine Baugruppe mit einem zweiachsigen Winkelgeschwindigkeitssensor 248 und zwei Beschleunigungssensoren 256,258 bezeichnet, die stellvertretend für die geschilderte Anordnung von vier solchen Baugruppen dargestellt ist und Winkelgeschwindigkeits- und Beschleunigungssignale liefert. Die Sensorsignale sind auf einen Sensorprozessor 552 geschaltet. Der Sensorprozessor 552 bewirkt die Fesselung und die Kompensation von Sensorfehlern, soweit diese im Sensor selbst kompensiert werden können. Der Sensorprozessor 552 liefert die digitalisierten Signale $m_{ix,y}$ und $b_{ix,y}$. In dem gestrichelten Viereck 554 sind die Rechnungen für die Flugregelung dargestellt. Block 556 symbolisiert die Selbstprüfung, die Mehrheitsbetrachtungen, die Sensorfehlerkompensation, die Auswahl durch Bildung eines Defektvektors und die Orthogonalisierung der Winkelgeschwindigkeitssignale, wie sie in Fig.16 dargestellt ist. Daraus ergeben sich die Signale $\omega_x$, $\omega_y$ und $\omega_z$. Diese Signale gehen einmal auf Block 558. Dieser Block stellt die Notchfilter, die Anti - Aliasing - Filter die Berechnung der Notchfilter - Parameter und die Überwachung der Notchfilter dar, wie sie in Fig.18 im einzelnen dargestellt sind. Block 558 liefert die Winkelgeschwindigkeiten p,q und r um die flugzeugfesten Achsen für die Flugregelung.

Die Beschleunigungssignale $b_{ix,y}$ gehen auf einen Block 560. Block 560 erhält auch die Winkelgeschwindigkeiten von Block 556. Block 560 stellt die Selbstprüfung der Bescheunigungssensoren, die Mehrheitsbetrachtungen, die Kompensation von Sensorfehlern einschließlich einer Hebelarmkompensation, die Auswahl durch Bildung eines Defektvektors, die Orthogonalisierung sowie die Momentenarmkompensation dar. Das sind die Funktionen, die in Fig.19 im einzelnen dargestellt sind. Auch die so erhaltenen Geschwindigkeitswerte sind auf eine Block 562 geschaltet, welcher Notchfilter, Anti - Aliasing - Filter, die Berechnung der Notchfilter - Parameter und die Überwachung der Notchfilter repräsentiert. Das ist ähnlich wie in Fig.18 und daher hier nicht noch einmal im einzelnen dargestellt. Es ergeben sich, wieder für die Flugregelung Beschleunigungswerte $a_x$, $a_y$ und - $a_z$.

Von dem Sensorprozessor 552 werden Winkelinkrementsignale $\Delta\theta_{ix,y}$ und Geschwindigkeitsinkrementsignale $\Delta v_{ix,y}$ für jede Baugruppe 212 bis 218 geliefert. Diese Signale gehen auf Block 564. Block 564 repräsentiert eine Selbstprüfung, eine Kompensation der Sensorfehler auf die für die Kurs-Lage - Referenz erforderliche Genauigkeit und eine Orthogonalisierung. Eine Auswahl der Meßwerte erfolgt nach Maßgabe der Defektvektoren aus Block 560. Das ist in Fig.20 im einzelnen dargestellt.

Die so erhaltenen Winkelinkrementsignale, zusammengefaßt in Vektoren $\Delta\theta^F$ und $\Delta v^F$ sind auf Block 566 geschaltet, der die "Strapdown" - Rechnungen gemäß Fig.21 darstellt. Block 566 erhält weiterhin einen Anfangswert der Quaternion von Block 568, der die Initialisierung mit Grob- und Feinausrichtung darstellt und im einzelnen in Fig. 12 und 13 dargestellt ist. Block 566 liefert die Richtungskosinusmatrix und die Geschwindigkeit $v^r$.

Diese Geschwindigkeit $v^r$ wird auf Block 568 gegeben sowie auf einen Block 570, der eine Schätzung des Anstellwinkels und des Schiebewinkels repräsentiert, die wirksam wird, wenn die Anstellwinkel- und Schiebewinkelfühler des Flugzeugs ausfallen. Der Block 570 erhält auch die Richtungskosinusmatrix von Block 566. Block 570 ist in Fig. 22 im einzelnen dargestellt.

Schließlich werden aus der Richtungskosinusmatrix gemäß Block 572 die Eulerwinkel berechnet.

Die Vertikalkomponente $v_z^r$ der im erdfesten Koordinatensystem gemessenen Geschwindigkeit wird auf einen Block 574 gegeben, der Block 160 in der Darstellung von Fig.9 entspricht und in Fig. 23 im einzelnen dargestellt ist. Das ist ein Vertikalkanal, der die Höhenänderung gestützt durch die barometrische Höhe liefert.

## Patentansprüche

1. Integriertes, redundantes Referenzsystem für die Flugregelung und zur Erzeugung von Kurs- und Lageinformationen, enthaltend

    (a) wenigstens vier strap down, d.h. trägerfahrzeugfest angeordnete Winkelgeschwindigkeitssensoren (10,12, 14,16 bzw. 248,250,252,254), deren mehr
als drei Eingangsachsen so zueinander orientiert sind, daß sie Winkelgeschwindigkeitsinformationen redundant liefern,
    (b) eine Mehrzahl von strap down, d.h. trägerfahrzeugfest angeordneten Beschleunigungssensoren (26,28,30, 32,34 bzw. 256,258,260,262,264,266,268,270), die Beschleunigungsinformationen liefern,
    (c) Mittel (126) zur Fehlererkennung, denen die Winkelgeschwindigkeitssignale zugeführt werden,
    (d) erste Signalverarbeitungsmittel (120),
        - denen die Winkelgeschwindigkeits- und Beschleunigungsinformationen zugeführt werden und
        - welche korrigierte Winkelgeschwindigkeits- und Beschleunigungssignale $(p,q,r,a_x,a_y,a_z)$ bezogen auf ein fahrzeugfestes Koordinatensystem für die Stabilisierung zur Aufschaltung auf einen Flugregler liefern, und
    (e) zweite Signalverarbeitungsmittel (148),

- denen die korrigierten Winkelgeschwindigkeits-und Beschleunigungsinformationen zugeführt werden und
- welche Kurs- und Lagereferenzsignale ( $\psi,\vartheta,\phi$ ) liefern,

**dadurch gekennzeichnet, daß**

(f) die wenigstens vier zweiachsigen Winkelgeschwindigkeitssensoren (248,250,252,254) mit unterschiedlichen Orientierungen angeordnet sind,

(g) die Signale sämtlicher Winkelgeschwindigkeitssensoren (258,250,252,254) auf die für alle Winkelgeschwindigkeitssensoren gemeinsamen Mittel (126) zur Fehlererkennung und -ausschaltung aufgeschaltet sind, welche einen Satz von ausgewählten Winkelgeschwindigkeitssignalen intakter Winkelgeschwindigkeitssensoren auswählen,

(h) die ersten und zweiten Signalverarbeitungsmittel (120,148) von den ausgewählten Winkelgeschwindigkeitsinformationen beaufschlagt sind.

2. Referenzsystem nach Anspruch 1, **dadurch gekennzeichnet, daß**

(i) die Beschleunigungssensoren (256,258,260,264,266,268,270) mit mehr als drei Eingangsachsen so zueinander orientiert sind, daß sie Beschleunigungsinformationen redundant liefern,

(j) die Beschleunigungsinformationen aller Beschleunigungssensoren (256,258,260,262,264,266,268,270) auf die Mittel (134) zur Fehlererkennung aufgeschaltet sind, welche daraus einen Satz von Beschleunigungsinformationen intakter Beschleunigungssensoren auswählt, und

(k) die ersten und zweiten Signalverarbeitungsmittel (120,148) von den ausgewählten Beschleunigungsinformationen beaufschlagt sind.

3. Referenzsystem nach Anspruch 1,**dadurch gekennzeichnet, daß** die Eingangsachsen der vier zweiachsigen Winkelgeschwindigkeitssensoren (10,12,14,16 bzw. 248,250,252,254) parallel zu jeweils verschiedenen Mantellinien eines gedachten Kegels (20 bzw. 244) orientiert sind.

4. Referenzsystemnach Anspruch 3, **dadurch gekennzeichnet, daß** die Eingangsachsen (228,230;232,234;236,238;240,242) der vier zweiachsigen Winkelgeschwindigkeitssensoren (248,250,252,254) paarweise symmetrisch in bezug auf die Achse des Kegels (244) orientiert sind.

5. Referenzsystem nach Anspruch 3, **dadurch gekennzeichnet, daß** jedem zweiachsigen Winkelgeschwindigkeitssensor (248,250,252,254) ein Paar von Beschleunigungsmessern (256,258;260,262;264,266;268,270) zugeordnet ist, deren Empfindlichkeitsachsen parallel zu je einer der Eingangsachsen (228,230;232,234;236,238;240,242) des zugeordneten Winkelgeschwindigkeitssensors (248,250,252,254) sind.

6. Referenzsystem nach Anspruch 3, **dadurch gekennzeichnet, daß** die Achse des Kegels parallel zur Nickachse des Flugzeugs verläuft.

7. Referenzsystem nach den Ansprüchen 2 und 3, **dadurch gekennzeichnet, daß**

(a) die Achse des gedachten Kegels (20), dessen Mantelfläche die Eingangsachsen der Winkelgeschwindigkeitssensoren (10,12,14,16) bestimmt, parallel zur Längsachse des Flugzeugs verläuft, und

(b) fünf Beschleunigungssensoren (26,28,30,32,34) vorgesehen sind,

(c) die Empfindlichkeitsachsen (42,44,46,48,50) der Beschleunigungssensoren (26,28,30,32,34) parallel zu verschiedenen Mantellinien der Mantelfläche eines gedachten zweiten Kegels (36) verlaufen

(d) die Achse des gedachten zweiten Kegels (36) parallel zur Hochachse (40) des Flugzeugs verläuft.

8. Referenzsystem nach Anspruch 6, **dadurch gekennzeichnet, daß**

(a) der Öffnungswinkel des gedachten zweiten Kegels (36) 54,73° beträgt und

(b) die Empfindlichkeitsachsen (42,44,46,48,50) der fünf Beschleunigungssensoren (26,28,30,32,34) durch sechs gleichmäßig um die Achse (38) des Kegels (36) verteilte Mantellinien bestimmt sind, indem jede dieser Empfindlichkeitsachsen (42,44,46,48,50) parallel zu einer von fünf dieser sechs Mantellinien verläuft.

9. Referenzsystem nach Anspruch 7, dadurch gekennzeichnet, daß

(a) in einem Sensorblock die Winkelgeschwindigkeitssensoren (10,12,14,16) räumlich etwa halbkreisförmig um die Fahrzeuglängsachse (24) herum angeordnet sind und
(b) die Beschleunigungssensoren (26,28,30,32,34) in dem Sensorblock im wesentlichen innerhalb dieser halbkreisförmigen Anordnung der Winkelgeschwindigkeitssensoren (10,12,14,16) angeordnet sind.

10. Referenzssystem nach Anspruch 1, dadurch gekennzeichnet, daß

(a) die Winkelgeschwindigkeitssensoren (10,12,14,16 bzw. 248,250,252,254) von zweiachsigen Wendekreiseln gebildet sind,
(b) für jeden dieser Winkelgeschwindigkeitssensoren (10,12,14,16 bzw. 248,250,252,254) eine gesonderte Stromversorgungseinheit (54,56, 58,60), eine gesonderte Motorstromversorgung (62,64,66,68) und eine gesonderte, von Meßsignalen beaufschlagte Signalverarbeitungseinheit (70,72,74,76) aufweist,
(c) jede Signalverarbeitungseinheit (70,72,74,76) außerdem von Beschleunigungssignalen wenigstens eines zugeordneten Beschleunigungssensors (26,28,30,32,34 bzw. 256,258,260,262,264,266,268,270) beaufschlagt ist,
(d) die Beschleunigungssensoren (26,28,30,32,40 bzw. 256,258,260,262,264,266,268,270) von Stromversorgungseinheiten (54,56,58,60) der Winkelgeschwindigkeitssensoren mitversorgt werden, und
(e) jede Signalverarbeitungseinheit (70,72,74,76) zwei Winkelgeschwindigkeitssignale und wenigstens ein Beschleunigungssignal liefert.

11. Referenzsystem nach Anspruch 10, **dadurch gekennzeichnet, daß**

(a) jeder als zweiachsiger Wendekreisel ausgebildete Winkelgeschwindigkeitssensor (10,12,14,16 bzw. 248,250,252,254)
  - einen dynamisch abgestimmten Kreisel (88) enthält sowie
  - einen ersten und einen zweiten Lageabgriff (90,92), die von der Motorstromversorgung (62,64,66,68) mit Wechselstrom gespeist werden, und
  - einen ersten und zweiten Drehmomenterzeuger (94,96),
(b) die Wechselstromsignale (90,92) durch je einen Demodulator (98,100) zur Bildung von demodulierten Abgriffsignalen demodulierbar sind,
(c) durch einen Multiplexer (102) die demodulierten Abgriffsignale auf einen Analog-Digital-Wandler (104) zur Bildung von digitalisierten Abgriffsignalen aufschaltbar sind,
(d) die digitalisierten Abgriffsignale auf eine digitale Signalverarbeitungsschaltung (106) geschaltet sind, welche digitale Fesselsignale für den Winkelgeschwindigkeitssensor liefert,
(e) die digitalen Fesselsignale auf einen Digital-Analog-Wandler (108) zur Erzeugung analoger Fesselsignale aufschaltbar sind,
(f) Analogwertspeichermittel (110) (Sample-Hold-Schaltungen) für die analogen Fesselsignale mit dem Digital-Analog-Wandler (108) verbunden sind und
(g) die Analogwertspeichermittel (110) mit den Drehmomenterzeugern (94,96) des Kreisels (88) verbnunden sind.

12. Referenzsystem nach Anspruch 1, dadurch gekennzeichnet, daß

(a) die Mittel (126) zur Fehlererkennung für die Winkelgeschwindigkeitssensoren (10,12,14,16 bzw. 248,250,252,254) nach dem Prinzip der Mehrheitsbetrachtung arbeiten und
(b) zur Messung bei ungestörtem Betrieb ein erster Satz von Winkelgeschwindigkeitssensoren (10,12 bzw. 248,250) herangezogen wird und
(c) bei Auftreten eines Fehlers eine Umschaltung auf einen nicht fehlerbehafteten zweiten Satz von Winkelgeschwindigkeitssensoren aus einer Folge von alternativen Sätzen auslösbar ist.

13. Referenzsystem nach Anspruch 1, **dadurch gekennzeichnet, daß**

(a) die Mittel (126,134) zur Fehlererkennung der Sensoren Linearkombinations- und Vergleichsmittel (368,438) enthalten, durch welche
- zu jedem von einem Sensor gemessenen Meßwert ein Vergleichswert durch Linearkombination von Meßwerten anderer, gleichartiger Sensoren gebildet wird,
- die Differenzen der Meßwerte und der zugehörigen Vergleichswerte gebildet werden und
- die Differenzen mit vorgegebenen Schwellwerten verglichen werden, sowie

(b) Lokalisierungsmittel, welche bei Auftreten eines Fehlers aus der Untermenge der Sensoren, für welche die zugehörigen Linearkombinations- und Vergleichsmittel eine Überschreitung des Schwellwertes anzeigen, den fehlerbehafteten Sensor bestimmen.

14. Referenzsystem nach Anspruch 13, **dadurch gekennzeichnet, daß** den Linearkombinations- und Vergleichsmitteln (368,438) Mehrheitsbetrachtungsmittel (342,412) vorgeschaltet sind, enthaltend

(a) Mittel zur mehrfachen Bildung eines Meßwertes als Linearkombinationen der Meßwerte von Paaren von Sensoren und

(b) Mittel zum Vergleichen jedes mit einem Paar von Sensoren gewonnenen Meßwertes mit einem Vergleichswert, der aus den Meßwerten aller anderen Paare von Sensoren gebildet ist, wobei ein Paar von Sensoren als fehlerhaft von der weiteren Signalverarbeitung ausgeschlossen wird, wenn die Differenz von Meßwert und Vergleichswert einen vorgegebenen Schwellwert überschreitet.

15. Referenzsystem nach Anspruch 13 oder 14, dadurch gekennzeichnet, daß die Schwellwerte in Abhängikeit von den Meßgrößen automatisch veränderbar sind.

16. Referenzsystem nach Anspruch 14, **dadurch gekennzeichnet, daß** den Mitteln (126) zur Fehlererkennung nach dem Prinzip der Mehrheitsbetrachtung eine Selbstprüfung (326,396) der Sensoren vorgeschaltet ist.

17. Referenzsystem nach Anspruch 1, **dadurch gekennzeichnet,** daß die ersten Signalverarbeitungsmittel

(a) Koordinatentransformationsmittel (130,138) enthalten zur Transformation der Signale, die von den Mitteln zur Fehlererkennung und -ausschaltung (126,134) erhalten werden, in
- transformierte Winkelgeschwindigkeitssignale, die auf ein fahrzeugfestes Koordinatensystem bezogen sind, bzw.
- transformierte Beschleunigungssignale, die auf ein fahrzeugfestes Koordinatensystem bezogen sind,
sowie

(b) Mittel (132) zur Berechnung und Ausgabe von Ausgangssignalen ($p,q,r,a_x,a_y,a_z$) für den Flugregler, die von diesen Winkelgeschwindigkeits-und Beschleunigungssignalen beaufschlagt sind.

18. Referenzsystem nach Anspruch 17, **dadurch gekennzeichnet,** daß die ersten Signalverarbeitungsmittel (120) erste Integrationsmittel (140) zur Integration der transformierten Winkelgeschwindigkeitssignale und zweite Integrationsmittel (142) zur Integration der transformierten Beschleunigungssignale aufweisen.

19. Referenzsystem nach Anspruch 1, **dadurch gekennzeichnet, daß**

(a) die ersten Signalverarbeitungsmittel (120) an Lageausgängen (144) Transformationsparameter liefern, die sich durch Integration von Winkelgeschwindigkeitsinformationen ergeben,

(b) die zweiten Signalverarbeitungsmittel (148)
- Anfangsausrichtmittel (150) zur Bestimmung von Anfangswerten der Transformationsparameter enthalten sowie
- Mittel (152) zur Bestimmung von Korrekturwerten zur Berücksichtigung von Erddrehung und Transportrate,
- Korrekturmittel (154) zur Korrektur der Transformationsparameter hinsichtlich Anfangswerten, Erddrehung und Transportrate und
- Mittel (155) zur Berechnung und Ausgabe der Eulerwinkel ( $\psi,\vartheta,\phi$ ) aus den so korrigierten Transformationsparametern.

**20.** Referenzsystem nach Anspruch 19, **dadurch gekennzeichnet, daß**

(a) die ersten Signalverarbeitungsmittel (120) an Geschwindigkeitsausgängen (146) Geschwindigkeitswerte liefern, die sich durch Integration von Beschleunigungsinformationen in einem fahrzeugfesten Koordinatensystem ergeben,

(b) die zweiten Signalverarbeitungsmittel (148) eine Koordinatentransformationsschaltung (156) enthalten, die

- mit den korrigierten Transformationsparametern der besagten Korrekturmittel (154) arbeitet und
- durch welche die besagten Geschwindigkeitswerte in ein erdfestes Koordinantensystem transformierbar sind,

(c) die Anfangsausrichtmittel (150) von den bei ruhendem Fahrzeug durch Integration von Beschleunigungskomponenten gemessenen Geschwindigkeitskomponenten beaufschlagt sind, die ein Maß für die anfängliche Schräglage des Fahrzeugs bilden.

**21.** Referenzsystem nach Anspruch 20, **dadurch gekennzeichnet,daß** die Anfangsausrichtmittel (150)

(a) schnell ansprechende Grobhorizontiermittel (274) enthalten, die von Geschwindigkeitsinkrementsignalen von den Beschleunigungssensoren beaufschlagt sind und eine anfängliche Richtungskosinusmatrix zur Transformation aus einem flugzeugfesten in ein erdfestes System liefern, sowie

(b) Mittel (276) zur Aktualisierung der Richtungskosinusmatrix, die von Winkelinkrementsignalen von den Winkelgeschwindigkeitssensoren beaufschlagt sind,

(c) Geschwindigkeitstransformationsmittel (278), die von den Geschwindigkeitsinkrementsignalen beaufschalgt sind und einen mit der Richtungskosinusmatrix transformierten Geschwindigkeitsvektor in einem erdfesten Koordinatensystem liefern,

(d) Feinhorizontierungsmittel (280), die von dem transformierten Geschwindigkeitsvektor sowie der geographischen Breite beaufschlagt sind und Lagekorrektursignale auf die Mittel (276) zur Aktualisierung der Richtungskosinusmatrix aufschaltet und Signale liefert, welche von dem Einfluß der Erddrehung auf die Winkelgeschwindigkeitssensoren bestimmt sind, und

(e) Mittel (286) zur Bestimmung des Kurses aus den besagten von der Erddrehung bestimmten Signalen.

**22.** Referenzsystem nach Anspruch 21, **dadurch gekennzeichnet, daß**

(a) zur anfänglichen Feinausrichtung des Systems die Quaternion benutzt wird, die ausgehend von einem Anfangswert durch Winkelinkrementsignale von den Winkelgeschwindigkeitssensoren (248,250,252,254) über Umwandlungsmittel (300) aktualisierbar ist,

(b) Umwandlungsmittel (304) zur Umwandlung der Quaternion in die Richtungskosinusmatrix vorgesehen sind, mit welcher eine Transformation der Geschwindigkeitsinkrementsignale von den Beschleunigungssensoren aus einem systemfesten Koordinatensystem in ein erdfestes Koordinatensystem erfolgt,

(c) die so transformierten Geschwindigkeitsinkrementsignale ein Kalmanfilter (312) beaufschlagen, welches den Einfluß der Erddrehung auf die Winkelgeschwindigkeitssensoren (248,250,252,254) nachbildet und erddrehungsabhängige Stellsignale für die Kurs- und Lagekorrektur erzeugt, wenn das durch die Richtungskosinusmatrix definierte Koordinatensystem von dem erdfesten Koordinatensystem abweicht, und

(d) die Stellsignale über Umwandlungsmittel (320) eine Korrektur der Quaternion bewirken.

**23.** Referenzsystem nach Anspruch 20, **dadurch gekennzeichnet, daß** die Anfangsausrichtmittel (150) von einer externen Anfangskursinformation beaufschlagt sind.

**24.** Referenzsystem nach Anspruch 20, **dadurch gekennzeichnet, daß**

Geschwindigkeitsrechnermittel (158) vorgesehen sind, denen

- die durch die Koordinatentransformationsschaltung (156) transformierten Geschwindigkeitswerte und
- Fluggeschwindigkeit ($V_{TAS}$) sowie Anstell- und Schiebewinkel ($\alpha$ bzw. $\beta$) zuführbar sind und welche
- Geschwindigkeitskomponenten auf die Mittel (152) zur Bestimmung von Korrekturwerten für die Berücksichtigung der Erddrehung und Transportrate aufschalten und

- Geschwindigkeitskomponenten auf eine durch die barometrische Höhe (h$_B$) gestützten Vertikalkanal (160) aufschalten, der Flughöhe und Vertikalgeschwindigkeit liefert.

**25.** Referenzsystem nach Anspruch 1, **gekennzeichnet durch**

(a) erste Mittel (610) zur Bestimmung der Flugzeuggeschwindigkeit gegenüber der umgebenden Luft aus der aerodynamisch gemessenen True Airspeed und den ebenfalls durch aerodynamische Sensoren gemessenen Anstell- und Schiebewinkeln,

(b) zweite Mittel (612,614) zur Bestimmung der Flugzeuggeschwindigkeit über Grund in einem flugzeugfesten Koordinatensystem,

(c) differenzbildende Mittel (618) zur Bestimmung der Windgeschwindigkeit im flugzeugfesten Koordinatensystem als Differenz der durch die ersten Mittel (610) bestimmten Flugzeuggeschwindigkeit gegenüber der umgebenden Luft und der durch die zweiten Mittel (612,614) bestimmten Flugzeuggeschwindigkeit über Grund,

(d) Speichermittel (620) zum Speichern der so bestimmten Windgeschwindigkeit,

(e) dritte Mittel (624) zur Bildung von Schätzwerten der Anstell- und Schiebewinkel aus der in den Speicheremitteln (620) gespeicherten Windgeschwindigkeit und der vonden zweiten Mitteln (612,614) gelieferten Fluzgzeuggeschwindigkeit über Grund,

(f) Umschaltmittel (632;638,640), durch welche bei Ausfall der aerodynamischen Sensoren für Anstell-und Schiebewinkel

- die Speichermittel von den differenzbildenden Mitteln (618) trennbar sind und
- die von den dritten Mitteln (624) gebildeten Schätzwerte von Anstell- und Schiebewinkel statt der Sensorsignale auf den Flugregelrechner aufschaltbar sind.

**Claims**

1. An integrated, redundant reference system for flight control and the production of information concerning heading and attitude, comprising

(a) at least four, strap down (i.e. firmly fixed to the carrying vehicle) angular velocity sensors (10,12, 14,16, or 248,250, 252,254), the input axes of more than three of which are so relatively oriented that they provide redundant angular velocity information signals,

(b) a plurality of strap down (i.e. firmly fixed to the carrying vehicle) acceleration sensors (26,28, 30,32,34 or 256,258, 260,262, 264,266, 268,270), which provide acceleration information signals,

(c) error detecting means (126) to which the angular velocity information signals are supplied,

(d) first signal processing means (120),

- to which the angular velocity and the acceleration information signals are supplied and
- which deliver corrected angular velocity and acceleration signals (p,q,r,a$_x$ ,a$_y$,a$_z$ ) based on a co-ordinate system that is fixed relative to the vehicle, the corrected signals serving to control the stabilisation of the vehicle and being transmissible to a flight controller, and

(e) second signal processing means (148),

- to which the corrected angular velocity and the acceleration signals are supplied and
- which deliver heading and attitude reference signals ($\psi,\theta,\phi$).

characterised in that,

(f) the at least four, two-axis angular velocity sensors (248,250,252,254) are arranged with different orientations,

(g) the signals from all of the angular velocity sensors (248,250,252,254) are coupled to the error detecting and eliminating means (126) common to all the angular velocity sensors, which means selects a set of selected angular velocity signals from intact angular velocity sensors,

(h) the set of selected angular velocity signals are applied to the first and second signal processing means (120,148).

2. A reference system according to claim 1, characterised in that,

(i) the input axes of more than three acceleration sensors (256,258, 260,262, 264,266, 268,270) are so relatively oriented that they provide redundant acceleration information signals,

(j) the acceleration information from all the acceleration sensors (256,258, 260,262, 264,266, 268,270) is coupled to the error detecting means (134) which selects therefrom a set of acceleration information from intact acceleration sensors, and

(k) the selected acceleration information is applied to the first and second signal processing means (120,148).

3. A reference system according to claim 1, characterised in that, the input axes of the four, two-axis angular velocity sensors (10,12, 14,16, or 248,250,252,254) are arranged parallel to respective generatrices of an imaginary cone (20 or 244).

4. A reference system according to claim 3, characterised in that, the input axes (228,230; 232,234; 236,238; 240,242) of the four, two-axis angular velocity sensors (248,250,252,254) are arranged in symmetrical pairs relative to the axis of the cone (244).

5. A reference system according to claim 3, characterised in that, a pair of acceleration sensors (256,258; 260,262; 264,266; 268,270) are associated with each two-axis angular velocity sensor (248,250,252,254), the sensing axes of which are each parallel to one of the input axes (228,230; 232,234; 236,238; 240,242) of the associated angular velocity sensor.

6. A reference system according to claim 3, characterised in that, the axis of the cone extends parallel to the pitch axis of the aircraft.

7. A reference system according to claims 2 and 3, characterised in that,

(a) the axis of the imaginary cone (20) whose surface determines the position of the input axes of the angular velocity sensors (10,12, 14,16) extends parallel to the longitudinal axis of the aircraft,
(b) five acceleration sensors (26,28,30,32,34) are provided,
(c) the sensing axes (42,44,46,48,50) of the accceleration sensors (26,28,30,32,34) extend parallel to respective generatrices on the surface of a second imaginary cone (36) and
(d) the axis of the second imaginary cone (36) extends parallel to the vertical axis (40) of the aircraft.

8. A reference system according to claim 6, characterised in that,

(a) the angle of the second imaginary cone (36) is 54·73° and
(b) the sensing axes (42,44,46,48,50) of the five acceleration sensors (26,28,30,32,34) are determined by six generatrices spaced equally around the axis of the cone (36), each sensing axis (42,44,46,48,50) being parallel to one of five of these six generatrices.

9. A reference system according to claim 7, characterised in that,

(a) the angular velocity sensors (10,12, 14,16) are arranged within a sensor block in the form of a semi-circle about the longitudinal axis (24) of the aircraft and
(b) the acceleration sensors (26,28,30,32,34) are located in the sensor block substantially within the semi-circular arrangement of the angular velocity sensors (10,12, 14,16).

10. A reference system according to claim 1, characterised in that,

(a) the angular velocity sensors (10,12, 14,16 or 248,250, 252,254) are formed as two-axis rate of turn indicating gyroscopes,
(b) each of the angular velocity sensors (10,12, 14,16 or 248,250, 252,254) has an individually associated power supply unit (54,56, 58,60), an individually associated motor power supply (62,64, 66,68) and an individually associated signal processing unit (70,72, 74,76) to which the measurement signals are applied,
(c) each signal processing unit (70,72, 74,76) receiving in addition acceleration signals from at least one of the associated acceleration sensors (26,28, 30,32,34 or 256,258, 260,262, 264,266, 268, 270),
(d) the acceleration sensors (26,28, 30,32,34 or 256,258, 260,262, 264,266, 268,270) are supplied from the power supply units (54,56, 58,60) associated with the angular velocity sensors, and

EP 0 263 777 B1

(e) each signal processing unit (70,72, 74,76) delivers two angular velocity signals and at least one acceleration signal.

**11.** A reference system according to claim 10, characterised in that,

(a) each of the angular velocity sensors (10,12, 14,16 or 248,250, 252,254) in the form of a two-axis rate of turn indicating gyroscope comprises
- a dynamically tuned gyroscope (88) as well as
- a first and a second position-indicating pick-up (90,92) which are supplied with alternating current from the motor power supplies (62,64, 66,68), and
- a first and second torquer (94,96),
(b) the ac signals (90,92) are each demodulateable in a respective demodulator (98,100) for forming a demodulated pick-up signal,
(c) the demodulated pick-up signals are coupleable via a multiplexer (102) to an analog-digital converter (104) for forming digitalised pick-up signals,
(d) the digitalised pick-up signals are applied to a digital signal processing circuit (106) which delivers digital caging signals for the angular velocity sensor,
(e) the digital caging signals are coupleable to a digital-analog converter (108) for producing analog caging signals,
(f) analog signal storage means (sample-and-hold circuits) (110) for the analog caging signals are connected to the digital-analog converter (108) and
(g) the analog signal storage means (110) are connected with the torquers (94,96) of the gyroscope (88).

**12.** A reference system according to claim 1, characterised in that,

(a) the error detecting means (126) for the angular velocity sensors (10,12, 14,16 or 248,250, 252,254) operates on the majority voting principle, and
(b) in normal operation, a first set of angular velocity sensors (10,12 or 248,250) are used for taking measurements and
(c) upon occurrence of an error, operation is switched to a second set of non-defective angular velocity sensors in accordance with a predefined sequence of alternative sets.

**13.** A reference system according to claim 1, characterised in that,

(a) the error detecting means (126,134) for the sensors comprises linear combining and comparing means (368,438) by means of which
- for each measurement value obtained from one sensor, a comparison value formed by linearly combining the measurement values from other similar sensors is formed,
- the differences between the measurement values and the comparison values are obtained and
- the differences are compared with predetermined threshold values, as well as
(b) localising means for determining the defective sensor in the event of an error among the plurality of sensors for which the associated linear combining and comparing means has indicated an over-stepping of the threshold.

**14.** A reference system according to claim 13, characterised in that, in series with the linear combining and comparing means (368,438), there are connected majority voting means (342,412) which comprise

(a) means for forming a plurality of measurement values as linear combinations of the measurement values from pairs of sensors and
(b) means for comparing each measurement value obtained from a pair of sensors with a comparison value obtained from the measurement values from all the other pairs of sensors, wherein a pair of sensors are excluded from further signal processing on the grounds of being defective, if the difference between the measurement value and the comparison value exceeds a predetermined threshold value.

**15.** A reference system according to claims 13 or 14, characterised in that, the threshold values are automatically variable in dependence on the magnitude of the measurements.

23

**16.** A reference system according to claim 14, characterised in that, a means (326,396) for self-checking the sensors precedes the error detecting means (126) operating on the majority voting principle

**17.** A reference system according to claim 1, characterised in that, the first signal processing means comprises

(a) co-ordinate transformation means (130,138) for transformation of the signals which are received from the error detecting and eliminating means (126,134) into
- transformed angular velocity signals which are based on the vehicle's own co-ordinate system,
- transformed acceleration signals which are based on the vehicle's own co-ordinate system, as well as

(b) means (132), to which these angular velocity and acceleration signals are applied, for calculating and supplying output signals (p, q, r, $a_x$, $a_y$, $a_z$) for the flight controller.

**18.** A reference system according to claim 17, characterised in that, the first signal processing means (120) includes first integration means (140) for integrating the transformed angular velocity signals and second integration means (142) for integrating the transformed acceleration signals.

**19.** A reference system according to claim 1, characterised in that,

(a) the first signal processing means (120) provides at an attitude output (144) transformation parameters which result from the integration of angular velocity information signals,
(b) the second signal processing means (148) comprises
- initialising means (150) for determining the initial values of the transformation parameters as well as
- means (152) for determining correcting values in respect of the earth's rotation and transport rate,
- correcting means (154) for correcting the transformation parameters in respect of the initial values, the earth's rotation and transport rate and
- means (155) for calculating and supplying the Euler angles ($\psi,\theta,\phi$) from the corrected transformation parameters.

**20.** A reference system according to claim 19, characterised in that,

(a) the first signal processing means (120) provides at a velocity indicating output (146), velocity values which result from the integration of acceleration information in a co-ordinate system based on the vehicle,
(b) the second signal processing means (148) comprises a co-ordinate transformation circuit (156), which
- processes the corrected transformation parameters from the said correcting means (154) and
- by means of which, the said velocity values are transformable into a co-ordinate system based on the earth,
(c) the initialising means (150) receives velocity components obtained by integration of acceleration components occurring while the vehicle was at rest, which velocity components provide a measure of the initial inclination of the vehicle.

**21.** A reference system according to claim 20, characterised in that, the initialising means (150) comprises

(a) means (274) for rapidly achieving an initial coarse-levelling, which means is supplied with incremental velocity signals from the acceleration sensors and which delivers an initial direction cosine matrix for transformation from an aircraft- related to an earth-related system, as well as
(b) means (276) for updating the direction cosine matrix, which means is supplied with angular increment signals from the angular velocity sensors,
(c) velocity transformation means (278) which is supplied with the incremental velocity signals and which, after the transformation in the direction cosine matrix, delivers a velocity vector in an earth-related co-ordinate system,
(d) fine-levelling means (280) which is supplied with the transformed velocity vector as well as the geographical latitude and which delivers an attitude correcting signal to the means (276) for updating

24

the direction cosine matrix and also signals which are indicative of the influence of the earth's rotation on the angular velocity sensors, and

(e) means (286) for determining the heading from the said signals indicative of the earth's rotation.

22. A reference system according to claim 21, characterised in that,

(a) for an initial fine-levelling of the system, a quaternion is used which is updateable from its initial value via a converting means (300) by the angular increment signals from the angular velocity sensors (248,250 252,254),

(b) conversion means (304) for converting the quaternion in the direction cosine matrix are provided whereby the incremental velocity signals from the acceleration sensors are transformed from a co-ordinate system based on the system to an earth-based co-ordinate system,

(c) the thus transformed incremental velocity signals being applied to a Kalman filter (312) which emulates the influence of the earth's rotation on the angular velocity sensors (248,250 252,254) and produces earth-rotation-dependent positioning signals for correcting the heading and attitude if the co-ordinate system defined by the direction cosine matrix deviates from the earth-based co-ordinate system and

(d) a correction of the quaternion being effected by the positioning signals via a converting means (320).

23. A reference system according to claim 20, characterised in that, the initialising means (150) is supplied externally with initial heading information.

24. A reference system according to claim 20, characterised in that, speed computing means (158) are provided to which
- the velocity values transformed in the co-ordinate transformation circuit (156) and
- the air speed ($V_{TAS}$) as well as the angles of attack and side-slip ($\alpha$ and $\beta$) are coupleable and which transmits
- the velocity components to the means (152) for determining correcting values in respect of the earth's rotation and transport rate, and
- the velocity components to a vertical channel (160) which is supplied with an indication of the barometric height ($h_B$) and which delivers altitude and vertical speed.

25. A reference system according to claim 1, characterised by,

(a) first means (610) for determining the aircraft speed relative to the surrounding air from the aerodynamically measured true airspeed and the angles of attack and side-slip similarly measured by aerodynamic sensors,

(b) second means (612,614) for determining the aircraft speed relative to ground in a co-ordinate system based on the aircraft,

(c) differencing means (618) for determining the wind speed in a co-ordinate system based on the aircraft by taking the difference between the aircraft speed relative to the surrounding air obtained from the first means (610) and the aircraft speed relative to ground obtained from the second means (612,614),

(d) storage means (620) for storing the thus determined wind speed,

(e) third means (624) for forming estimated values of the angles of attack and side-slip from the wind speed stored in the storage means (620) and the aircraft speed relative to ground obtained from the second means (612,614),

(f) switch-over means (632;638,640) by means of which, in the event of failure of the aerodynamic sensors for the angles of attack and side-slip,
- the storage means (620) is disconnected from the differencing means (618) and
- the estimated values of the angles of attack and side-slip from the third means (624) are coupled to the flight control computer instead of the sensor signals.

**Revendications**

1.  Système de référence redondant intégré destiné au pilotage automatique et à la génération d'informations de cap et d'assiette, comprenant

(a) au moins quatre détecteurs de vitesse angulaire (10,12,14,16 et 248,250,252,254,) strapdown, c'est-à-dire disposés stationnairement par rapport au véhicule de support, plus de trois axes d'entrée de ces détecteurs étant orientés l'un relativement à l'autre de sorte qu'ils fournissent des informations de vitesse angulaire de manière redondante,

(b) une pluralité de détecteurs d'accélération (26,28,30,32,34 et 256,258,260,262,264,266,268,270,) strapdown, c'est-à-dire disposés stationnairement par rapport au véhicule de support, fournissant des informations d'accélération,

(c) des moyens (126) destinés à la reconnaissance d'erreurs auxquels sont appliqués les signaux de vitesse angulaire,

(d) des premiers moyens de traitement de signal (120)
- auxquels sont applqués les informations de vitesse angulaire et d'accélération, et
- qui fournissent des signaux de vitesse angulaire et d'accélération corrigés (p,q,r $a_x,a_y,a_z$) par rapport à un système des coordonnées fixe par rapport au véhicule pour la stabilisation, destinés à l'application à un pilote automatique, et

(e) des seconds moyens de traitement de signal (148)
- auxquels sont appliquées les informations de vitesse angulaire et d'accélération corrigées, et
- qui fournissent des signaux de cap et d'assiette ($\psi,\theta,\phi$),

**caractérisé par le fait que**

(f) les détecteurs de vitesse angulaire (248,250,252,254) au moins au nombre de quatre, sont disposés avec des orientations différentes,

(g) les signaux de tous les détecteurs de vitesse angulaire (258,250,252,254) sont appliqués aux moyens (126) communs pour tous les détecteurs de vitesse angulaire et destinés à la reconnaissance et supression d'erreurs, et qui choisissent un groupe de signaux de vitesse angulaire choisis de détecteurs de vitesse angulaire intacts,

(h) les informations de vitesse angulaire choisies sont appliquées aux premiers et seconds moyens de traitement de signal (120,148).

2. Système de référence selon la revendication 1, **caractérisé par le fait que**

(i) les détecteurs d'accélération (256,258,260,264,266,268,270) sont orientés l'un par rapport à l'autre avec plus de trois axes d'entrée de sorte qu'ils fournissent les informations d'accélération de manière redondante,

(j) les informations d'accélération de tous les détecteurs d'accélération (256,258,260,262,264,266,268,270) sont appliquées aux moyens (134) destinés à la reconnaissance d'erreur qui en choisissent un groupe d'informations d'accélération de détecteurs d'accélération intacts, et

(k) les informations d'accélération choisies sont appliquées aux premiers et seconds moyens de traitement de signal (120,148).

3. Système de référence selon la revendication 1, **caractérisé par le fait que** les axes d'entrée des quatre détecteurs de la vitesse angulaire (10,12,14,16 et 248,250,252,254,) biaxiaux sont orientés parallèlement à des lignes de nappe à la fois différentes d'un cône imaginaire (20 et 244).

4. Système de référence selon la revendication 3, **caractérisé par le fait que** les axes d'entrées (228,230;232,234;236,238;240242) des quatres détecteurs de vitesse angulaire (248,250,252,252254) biaxiaux sont orientés symétriquement deux par deux par rapport à l'axe du cône (244).

5. Système de référence selon la revendication 3, **caractérisé par le fait qu'**une paire d'accéléromètres (256,258;260,262;264,266;268,270) est associée à chaque détecteur de la vitesse angulaire (248,250,252,254), les axes de sensibilité des accéléromètres étant parallèles à un axe d'entrée à la fois (228,230;232,234;236,238;240,242) du détecteur de vitesse angulaire associé (248,250,252,254).

6. Système de référence selon la revendication 3, **caractérisé par le fait que** l'axe du cône s'étend parallèlement à l'axe de tangage de l'avion.

7. Système de référence selon les revendications 2 et 3, **caractérisé par le fait que**

(a) l'axe du cône imaginaire (20) dont la nappe détermine les axes d'entrée des détecteurs de vitesse angulaire (10,12,14,16), s'étend parallèlement à l'axe longitudinal de l'avion,

(b) cinq détecteurs d'accélération (26,28,30,32,34) sont prévus,

(c) les axes de sensibilité (42,44,46,48,50) des détecteurs d'accélération (26,28,30,32,34) s'étendent parallèlement à des lignes de nappe différentes de la nappe d'un second cône imaginairee (36), et

(d) l'axe du second cône imaginaire (36) s'étend parallèlement à l'axe normal (40) de l'avion.

8. Système de référence selon la revendication 6, **caractérisé par le fait que**

(a) l'angle d'ouverture du second cône imaginaire (36) s'elève à 54,73°, et

(b) les axes de sensibilité (42,44,46,48,50) des cinq détecteurs d'accélération (26,28,30,32,34) sont déterminés par six lignes de nappe, reparties régulièrement autour de l'axe (38) du cône (36), en ce que chacun de ces axes de sensibilité (42,44,46,48,50) s'étend parallèlement à l'une de cinq des six de ces lignes de nappe.

9. Système de référence selon la revendication 7, **caractérisé par le fait que**

(a) dans un bloc de détecteurs, les détecteurs de vitesse angulaire (10,12,14,16) sont disposés en espace approximativement en forme demi-circulaire autour de l'axe longitudinal du véhicule (24), et

(b) les détecteurs d'accélération (26,28,30,32,34) sont disposés dans le bloc de détecteurs généralement à l'intérieur de cette disposition demi-circulaire des détecteurs de vitesse angulaire (10,12,14,16).

10. Système de référence selon la revendication 1, **caractérisé par le fait que**

(a) les détecteurs de vitesse angulaire (10,12,14,16, et 248,250,252,254) sont formés par des gyromètres biaxiaux,

(b) chacun de ces détecteurs de vitesse angulaire (10,12,14,16 et 248,250,252,254) a une unité d'alimentation en courant électrique séparée (54,56,58,60), un bloc d'alimentation de moteur séparé (62,64,66,68) et une unité de traitement de signal séparée (70,72,74,76) à laquelle sont appliqués des signaux de mesure,

(c) en outre, des signaux d'accélération d'au moins un détecteur d'accélération associé (26,28,30,32,34 et 256,258,260,262,264,266,268,270) sont appliqués à chaque unité de traitement de signal (70,72,74,76),

(d) les détecteurs d'accélération (26,28,30,32,40 et 256,258,260,264,266,268,270) sont également alimentés par des unités d'alimentation en courant électrique (54,56,58,60) des détecteurs de vitesse angulaire, et

(e) chaque unité de traitement de signal (70,72,74,76) fournit deux signaux de vitesse angulaire et au moins un signal d'accélération.

11. Système de référence selon la revendication 10, **caractérisé par le fait que**

(a) chaque détecteur de vitesse angulaire (10,12,14,16 et 248,250,252,254) formé comme gyromètre biaxial comprend
   - un gyroscope dynamiquement accordé (88), ainsi que
   - une première et une seconde prise d'assiette (90,92) alimentée par le bloc d'alimentation de moteur (62,64,66,68) en courant alternatif, et
   - un premier et un second générateur de couple (94,96),

(b) les signaux de courant alternatif (90,92) sont chacun démodulables par un démodulateur (98,100) afin de former des signaux de prise démodulés,

(c) les signaux de prise démodulés sont applicables par un multiplexeur (102) à un convertisseur analogique digital (104) afin de former des signaux de prise digitalisés,

(d) les signaux de prise digitalisés sont appliqués à un circuit de traitement de signal digital (106) fournissant des signaux captés digitaux pour le détecteur de la vitesse angulaire,

(e) les signaux captés digitaux sont applicables à un convertisseur analogique ditital (108) afin de former des signaux captés analogiques,

(f) des moyens de mémorisation de valeur analogique (110) (Sample-Hold-circuits) pour les signaux captés analogiques sont reliés au convertisseur analogique digital (108), et

(g) les moyens de mémorisation de valeur analogique (110) sont reliés aux générateurs de couple (94,96) du gyroscope (88).

12. Système de référence selon la revendication 1, caractérisé par le fait que

(a) les moyens 126 destinés à la reconnaissance d'erreur pour les détecteurs de vitesse angulaire (10,12,14,16 et 248,25,252,254) fonctionnent selon le principe de la pluri-observation, et

(b) pour le mesurage lors du fonctionnement non-perturbé, un premier groupe de détecteurs de vitesse angulaire (10,12 et 248,250) est utilisé, et

(c) en cas d'apparition d'une erreur, un renversement est déclenchable à un second groupe de détecteurs de vitesse angulaire, qui n'est pas affecté d'erreurs et choisi d'une séquence de groupes alternatifs.

**13.** Système de référence selon la revendication 1, **caractérisé par le fait que**

(a) les moyens (126,134) destinés à la reconnaissance d'erreur des détecteurs comprennent des moyens de combinaison linéaire et de comparaison (368,438), par lesquels

- pour chaque valeur de mesure mesurée par un détecteur, une valeur comparative est formée par combinaison linéaire de valeurs de mesure d'autres détecteurs similaires,
- les différences des valeurs de mesure et des valeurs comparatives associées sont formées, et
- les différences sont comparées à des valeurs seuils prédéterminées, ainsi que

(b) des moyens de localisation qui, en cas d'apparition d'une erreur, déterminent le détecteur affecté d'une erreur à partir de la sous-collection des détecteurs pour lesquels les moyens de combinaison linéaire et de comparaison associés indiquent un dépassement de la valeur seuil.

**14.** Système de référence selon la revendication 13, **caractérisé par le fait que** des moyens de pluri-observation (342,412) sont intercalés en aval des moyens de combinaison linéaire et de comparaison (368,438), comprenant

(a) des moyens destinés à former plusieurs fois une valeur de mesure comme combinaison linéaire des valeurs de mesure de paires de détecteurs, et

(b) des moyens destinés à comparer chaque valeur de mesure obtenue avec une paire de détecteurs à une valeur comparative formée à partir des valeurs de mesure de toutes les autres paires de détecteurs, une paire de détecteurs étant exclue de l'autre traitement de signal en tant qu'affectée d'erreurs, lorsque la différence de valeur de mesure et valeur comparative dépasse une valeur seuil prédéterminée.

**15.** Système de référence selon la revendication 13 ou 14, **caractérisé par le fait que** les valeurs seuils sont automatiquement variables en fonction des grandeurs de mesure.

**16.** Système de référence selon la revendication 14, **caractérisé par le fait qu'**un contrôle automatique (326,396) des détecteurs est intercalé en aval des moyens (126) destinés à la reconnaissance d'erreurs selon le principe de la pluri-observation.

**17.** Système de référence selon la revendication 1, **caractérisé par le fait que** les premiers moyens de traitement de signal comprennent

(a) des moyens de transformation de coordonnées (130,138) destinés à la transformation des signaux obtenus par les moyens destinés à la reconnaissance et la supression d'erreur (126,134), en

- signaux de vitesse angulaire transformés se référant à un système des coordonnées fixe par rapport au véhicule, ou
- en signaux d'accélération transformés se référant à un système des coordonnées fixe par rapport au véhicule,
  ainsi que

(b) des moyens (132) destinés à calculer et sortir des signaux de sortie $(p,q,r,a_x,a_y,a_z)$ pour l'autopilote, auxquels ces signaux de vitesse angulaire et d'accélération sont appliqués.

**18.** Système de référence selon la revendication 17, **caractérisé par le fait que** les premiers moyens de traitement de signal (120) ont des premiers moyens d'intégration (140) destinés à l'intégration des signaux de vitesse angulaire transformés, et des seconds moyens d'intégration (142) destinés à l'intégration des signaux d'accélération transformés.

**19.** Système de référence selon la revendication 1, **caractérisé par le fait que**

(a) les premiers moyens de traitement de signal (120) fournissent aux sorties d'assiette (144) des paramètres de transformation résultant de l'intégration d'informations de vitesse angulaire,

(b) les seconds moyens de traitement de signal (148) comprennent

- des moyens d'alignement de départ (150) destinés à la détermination de valeurs de départ des paramètres de transformation, ainsi que
- des moyens (152) destinés à la détermination de valeurs de correction pour tenir compte de la

28

rotation terrestre et du taux de transport,
- des moyens de correction (154) destinés à corriger les paramètres de transformation à l'egard des valeurs de départ, la rotation terrestre et le taux de transport, et
- des moyens (155) destinés à calculer et sortir des angles eulériens ($\psi,\vartheta,\phi$) à partir des paramètres de transformation ainsi corrigés.

20. Système de référence selon la revendication 19, **caractérisé par le fait que**
(a) les premiers moyens de traitement de signal (120) fournissent aux sorties de vitesse (146) des valeurs de vitesse résultant par l'intégration d'informations d'accélération dans un système des coordonnées fixe par rapport au véhicule,
(b) les seconds moyens de traitement de signal (148) comprennent un circuit de transformation de coordonnées (156), qui
- travaille avec les paramètres de transformation corrigés desdits moyens de correction (154), et
- par lesquels lesdites valeurs de vitesse sont transformables dans un système de coordonnées fixe par rapport à la terre,
(c) les composantes de vitesse mesurées par intégration de composantes d'accélération à véhicule arrêté, et formant une mesure pour la position inclinée initiale du véhicule, sont appliquées aux moyens d'alignement de début (150).

21. Système de référence selon la revendication 20, **caractérisé par le fait que** les moyens d'alignement de début (150) comprennent
(a) des moyens d'ajustement d'horizon approximatif (274) répondant rapidement auxquels sont appliqués les signaux d'incrément de vitesse des détecteurs d'accélération, et qui fournissent une matrice de cosinus de direction initiale afin de la transformer d'un système fixe par rapport à l'avion dans un système fixe par rapport à la terre, ainsi que
(b) des moyens (276) destinés à l'actualisation de la matrice de cosinus de direction, auxquels sont appliqués des signaux d'incrément angulaire des détecteurs de vitesse angulaire,
(c) des moyens de transformation de vitesse (278) auxquels sont appliqués les signaux d'incrément de vitesse et qui fournissent un vecteur de vitesse transformé avec la matrice de cosinus de direction dans un système des coordonnées fixe par rapport à la terre,
(d) des moyens d'ajustement d'horizon précis auxquels sont appliqués le vecteur de vitesse transformé ainsi que la largeur géographique, et qui appliquent des signaux de correction d'assiette aux moyens (276) destinés à l'actualisation de la matrice de cosinus de direction, et qui fournissent des signaux déterminés par l'influence de la rotation terrestre sur les détecteurs de vitesse angulaire, et
(e) des moyens (286) destinés à la détermination du cap à partir desdits signaux déterminés par la rotation terrestre.

22. Système de référence selon la revendication 21, **caractérisé par le fait que**
(a) pour l'alignement précis initial du système, la quaternion est utilisée, qui, partant d'une valeur initiale, est actualisable par des signaux d'incrément angulaire des détecteurs de vitesse angulaire (248,250,252,254) par des moyens convertisseurs (300),
(b) des moyens convertisseurs (304) sont prévus, destinés à convertir la quaternion dans la matrice de cosinus de direction avec laquelle une transformation des signaux d'incrément de vitesse des détecteurs d'accélération d'un système des coordonnées fixe par rapport au système dans un système fixe par rapport à la terre, est effectué,
(c) les signaux d'incrément de vitesse ainsi transformés sont appliqués à un filtre Kalman (312) reproduisant l'influence de la rotation terrestre sur les détecteurs de vitesse angulaire (248,250,252,254) et engendrant des signaux de commande en fonction de la rotation terrestre pour la correction du cap et de l'assiette, lorsque le système des coordonnées défini par la matrice de cosinus de direction dévie du système des coordonnées fixe par rapport à la terre, et
(d) les signaux de commande provoquent par des moyens convertisseurs (320) une correction de la quaternion.

23. Système de référence selon la revendication 20, **caractérisé par le fait que** des informations de cap de départ externes sont appliquées aux moyens d'alignement de départ (150).

24. Système de référence selon la revendication 20, **caractérisé par le fait que**

des moyens calculateur de vitesse (158) sont prévus, auxquels

- sont applicables les valeurs de vitesse transformées par le circuit de transformation de coordonnées (156), et
- la vitesse de vol (V$_{TAS}$) ainsi que les angles d'incidence et de dérapage ($\alpha$ et $\beta$), et qui
- appliquent des composantes de vitesse à des moyens (152) destinés à la détermination de valeurs de correction tenant compte de la rotation terrestre et du taux de transport, et
- appliquent des composantes de vitesse à un canal vertical supporté par l'altitude barométrique (h$_B$) et fournissant l'altitude de vol et la vitesse verticale.

25. Système de référence selon la revendication 1, **caractérisé par**

(a) des premiers moyens (610) destinés à la détermination de la vitesse d'avion par rapport à l'air entournante de la True Airspeed mesurée aérodynamiquement et des angles d'incidence et de dérapage également mesurés par des détecteurs aérodynamiques,

(b) des seconds moyens (612,614) destinés à la détermination de la vitesse d'avion sur le fond dans un système des coordonnées fixe par rapport à l'avion

(c) des moyens de formation de différence (618) destinés à la détermination de la vitesse de vent dans le système des coordonnées fixe par rapport à l'avion comme différence de la vitesse d'avion déterminée par les premiers moyens (610) par rapport à l'air entourante et la vitesse d'avion déterminée par les seconds moyens (612,614) sur le fond,

(d) des moyens de mémoire (620) destinés à mémoriser la vitesse de vent ainsi déterminée,

(e) des troisièmes moyens (624) destinés à la formation de valeurs estimatives des angles d'incidence et de dérapage à partir de la vitesse de vent mémorisée dans les moyens de mémoire (620) et de la vitesse d'avion sur fond, fournie par les seconds moyens (612,614),

(f) des moyens de renversement (632;638,640) par lesquels en cas de défaillance des détecteurs aérodynamique pour l'angle d'incidence et de dérapage

- les moyens de mémoire sont séparables des moyens de formation de différence (618), et
- les valeurs estimatives d'angle d'incidence et de dérapage, formées par les troisièmes moyens (624) sont applicables à la place des signaux de détecteur au calculateur de l'autopilote.

Fig.1

Fig.2

Fig.3

Fig.4

EP 0 263 777 B1

EP 0 263 777 B1

Fig.5

Fig.6

33

Fig. 7

Fig.8

EP 0 263 777 B1

Fig.9

Fig.10

Fig.11

38

Fig. 12

Fig. 13

KREISEL1

$m_{1x}$ | $m_{1y}$

248

250

252

254

$$Z = \frac{N!}{n! \; (N-h)!}$$

| K1 | ∧ | K2 |
| K1 | ∧ | K3 |
| K1 | ∧ | K4 |
| K2 | ∧ | K3 |
| K2 | ∧ | K4 |
| K3 | ∧ | K4 |

Fig.14

Mehrheitsbetrachtung(Voting)über
redundante Nickgeschwindigkeit

$$q = K_1 (G1x + G1y) = K_1 (G2x + G2y) = K_1(G3x + G3y) = K_1 (G4x + G4y)$$

Gültigkeit von Roll-und Giergeschwindigkeitsinformationen

Nickgeschwindigkeitsausfall         gültige Quellen der Rollgeschwindigkeit

| | $K_1(G2x - G2y)$ | $(G3x - G3y) - K_1(G1x - G1y)$ | $(G4x - G4y) + K_1(G1x - G1y)$ | $K_2(G3x - G3y) + K_2(G4x - G4y)$ |
|---|---|---|---|---|
| G1 | 1 | 0 | 0 | 1 |
| G2 | 0 | 1 | 1 | 1 |
| G3 | 1 | 0 | 1 | 0 |
| G4 | 1 | 1 | 0 | 0 |

gültige Quellen der Giergeschwindigkeit

| | $(G4x - G4y) - K_1(G2x - G2y)$ | $K_2(G4x - G4y) - K_2(G3x - G3y)$ | $K_1(G1x - G1y)$ | $(G3x - G3y) + K_1(G2x - G2y)$ |
|---|---|---|---|---|
| G1 | 1 | 1 | 0 | 1 |
| G2 | 0 | 1 | 1 | 0 |
| G3 | 1 | 0 | 1 | 0 |
| G4 | 0 | 0 | 1 | 1 |

*Fig.15*

Fig.16

Fig. 17

EP 0 263 777 B1

Fig. 18

Fig.19

EP 0 263 777 B1

Fig. 20

Fig. 21

$\underline{\Delta\Theta}^F$  504

506

516

510

512

520

522

518

524

526

514

528  530  532

$\underline{\Delta V}^F$  508

534  $\underline{\Delta V}^r$

EP 0 263 777 B1

48

Fig.22

Fig.23

EP 0 263 777 B1

Fig. 24